# EUROPEAN PATENT APPLICATION

(11) **EP 4 815 556 A1**
(43) Date of publication of application: **30.09.2026**
(21) Application number: 23962588.2
(22) Date of filing: 26.12.2023
(51) Int. Cl.: H04W 28/10

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); LENG, Bingxue, Dongguan, Guangdong 523860 (CN); YU, Xinlei, Dongguan, Guangdong 523860 (CN)
(74) Representative: Penza, Giancarlo
(86) International application number: PCT/CN2023/142145
(87) International publication number: WO 2025/137894

(57) **Abstract**

Provided in the present application are a wireless communication method and a communication device. The method comprises: a first device sending first information to a second device, wherein the first information is related to a transmission rate. By means of first information, a second device can obtain the condition of a rate, and can then adjust a transmission process, so as to better match the performance and experience of a user.

## Description

### TECHNICAL FIELD

The present disclosure relates to the field of communication technologies, and more specifically, to a wireless communication method and a communication device.

### BACKGROUND

Some services may experience changes in transmission rate. For example, for extended reality (XR), a typical value of the frame rate for XR that can be supported by the related art may include one of 15, 30, 45, 60, 72, 90, and 120 fps, corresponding to periods of 66.66, 33.33, 22.22, 16.66, 13.88, 11.11, and 8.33 ms, respectively. In practical applications, implementations of many XR applications can adjust the bit rate/frame rate in response to changes in connection quality.

### SUMMARY

The present disclosure provides a wireless communication method and a communication device. Various aspects of the present disclosure are described below.

In a first aspect, there is provided a wireless communication method, which includes the following operations.

A first device transmits first information to a second device. Here, the first information is related to a transmission rate.

In a second aspect, there is provided a wireless communication method, which includes the following operations.

A second device receives first information transmitted by a first device. Here, the first information is related to a transmission rate.

In a third aspect, there is provided a wireless communication method, which includes the following operations.

A second device performs a first operation based on first information. Here, the first information is related to a transmission rate, and the first operation is related to one or more of: transmission parameters, transmission resources, or scheduling.

In a fourth aspect, there is provided a communication device. The communication device is a first device, and includes a transmitting unit.

The transmitting unit is configured to transmit first information to a second device. Here, the first information is related to a transmission rate.

In a fifth aspect, there is provided a communication device. The communication device is a second device, and includes a receiving unit.

The receiving unit is configured to receive first information transmitted by a first device. Here, the first information is related to a transmission rate.

In a sixth aspect, there is provided a communication device. The communication device includes an execution unit.

The execution unit is configured to perform a first operation based on first information. Here, the first information is related to a transmission rate, and the first operation is related to one or more of: transmission parameters, transmission resources, or scheduling.

In a seventh aspect, there is provided a communication device. The communication device includes a processor and a memory.

The memory is configured to store one or more computer programs. The processor is configured to call the computer programs in the memory to cause the communication device to perform part or all of the operations of the methods in the above aspects.

In an eighth aspect, the embodiments of the present disclosure provide a communication system, including the above-described communication device. In another possible design, the system may further include other devices that interact with the communication device in the solutions provided by the embodiments of the present disclosure.

In a ninth aspect, the embodiments of the present disclosure provide a computer-readable storage medium storing a computer program that causes a communication device to perform part or all of the operations of the methods in the above aspects.

In a tenth aspect, the embodiments of the present disclosure provide a computer program product. The computer program product includes a non-transitory computer-readable storage medium storing a computer program that is operable to cause a communication device to perform part or all of the operations of the methods in the above aspects. In some implementations, the computer program product may be a software installation package.

In an eleventh aspect, the embodiments of the present disclosure provide a chip including a memory and a processor. The processor can call and execute a computer program from the memory to implement part or all of the operations of the methods in the above aspects.

Through the first information, the second device can obtain the situation of the transmission rate, so that the transmission process can be adjusted based on the transmission rate, so as to better match the performance and experience of the user.

### BRIEF DESCRIPTION OF THE DRAWINGS

FIG. 1 is a diagram of a wireless communication system applicable to an embodiment of the present disclosure.
FIG. 2 is a flowchart of a wireless communication method provided by an embodiment of the present disclosure.
FIG. 3 is a flowchart of a wireless communication method provided by Embodiment 1 of the present disclosure.
FIG. 4 is a flowchart of a wireless communication method provided by Embodiment 2 of the present disclosure.
FIG. 5 is a flowchart of a wireless communication method provided by Embodiment 3 of the present disclosure.
FIG. 6 is a flowchart of a wireless communication method provided by Embodiment 4 of the present disclosure.
FIG. 7 is a structural diagram of a communication device provided by an embodiment of the present disclosure.
FIG. 8 is a structural diagram of another communication device provided by an embodiment of the present disclosure.
FIG. 9 is a structural diagram of another communication device provided by an embodiment of the present disclosure.
FIG. 10 is a structural diagram of an apparatus for communication provided by an embodiment of the present disclosure.

### DETAILED DESCRIPTION

Hereinafter, technical solutions in the present disclosure will be described with reference to the accompanying drawings.

### Communication system

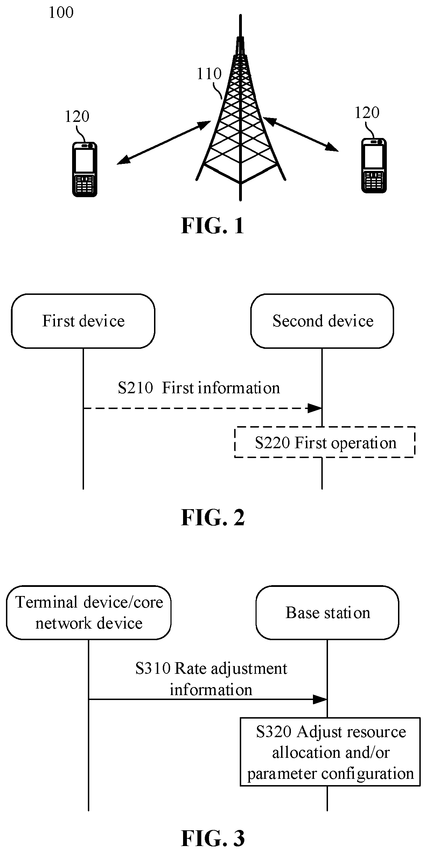

FIG. 1 is a wireless communication system 100 applicable to the embodiments of the present disclosure. The wireless communication system 100 may include a communication device. The communication device may include a network device 110 and a terminal device 120. The network device 110 may be a device that communicates with the terminal device 120.

FIG. 1 illustrates one network device and two terminals as an example. Optionally, the wireless communication system 100 may include multiple network devices, and the another number of terminal devices may be included in the coverage area of each network device, which is not limited in the embodiments of the present disclosure.

Optionally, the wireless communication system 100 may further include other network entities such as a network controller and a mobile management entity, which is not limited in the embodiments of the present disclosure.

It should be understood that the technical solutions of the embodiments of the present disclosure can be applied to various communication systems, such as a fifth generation (5G) system or a new radio (NR) system, a long term evolution (LTE) system, an LTE frequency division duplex (FDD) system, an LTE time division duplex (TDD) system, and the like. The technical solutions provided by the present disclosure can also be applied to future communication systems, such as sixth generation mobile communication systems, satellite communication systems, and the like.

The terminal device in the embodiments of the present disclosure may also be referred to as user equipment (UE), an access terminal, a user unit, a user station, a mobile station (MS), a mobile terminal (MT), a remote station, a remote terminal, a mobile device, a user terminal, a terminal, a wireless communication device, a user agent, or a user device. The terminal device in the embodiments of the present disclosure may be a device that provides voice and/or data connectivity to a user, and may be used to connect people, objects, and machines, such as a handheld device or vehicle-mounted device with a wireless connection function. The terminal device in the embodiments of the present disclosure may be a mobile phone, a pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. Alternatively, the UE may be used to act as a base station. For example, a UE may act as a scheduling entity that provides sidelink signals between UEs in vehicle-to-everything (V2X) or device-to-device (D2D), or the like. For example, a cellular telephone and a car communicate with each other using sidelink signals. Communication between a cellular phone and a smart home device may occur without relaying communication signals through a base station.

The network device in the embodiments of the present disclosure may be a device for communicating with a terminal device. The network device may also include an access network device. The access network device may provide communication coverage for a particular geographic area and may communicate with the terminal device 120 located within the coverage area. The access network device may also be referred to as a radio access network device, a base station, or the like. The access network device in the embodiments of the present disclosure may refer to a radio access network (RAN) node (or device) that connects a terminal device to a radio network. The access network device may broadly cover, or be replaced with, various names such as a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. A base station may also refer to a communication module, a modem, or a chip disposed within the aforementioned devices or apparatus. The base station may also be a mobile switching center, a device that performs a base station function in D2D, V2X, machine-to-machine (M2M) communication, a network-side device in a 6G network, a device that performs a base station function in a future communication system, or the like. The base station may support networks with the same or different access technologies. The embodiments of the present disclosure do not limit the specific technology and the specific device form adopted by the access network device.

The base station may be stationary or mobile. For example, a helicopter or a drone may be configured to act as a mobile base station, and one or more cells may move according to the location of the mobile base station. In other examples, a helicopter or drone may be configured to be used as a device that communicates with another base station.

The communication device involved in the wireless communication system may include not only an access network device and a terminal device, but also a core network (CN) element. The core network element can be realized by devices, that is, the core network element is a core network device. It will be understood that the core network device may also be a network device.

The core network element in the embodiments of the present disclosure may include a network element that processes and forwards signaling and data of a user. For example, the core network device may include a core access and mobility management function (AMF), a session management function (SMF), a user plane gateway, a location management function (LMF), and/or other core network devices. Here, the user plane gateway may be a server having functions such as mobility management, routing, and forwarding of user plane data, and is generally located at the network side, such as a serving gateway (SGW), a packet data network gateway (PGW), a user plane function (UPF), or the like. Of course, the core network can also include other network elements, which are not listed here.

In some deployments, the network device in the embodiments of the present disclosure may refer to a CU or a DU, or the network device may include a CU and a DU. The gNB may also include an AAU.

The network device and the terminal device may be deployed on land, including indoor or outdoor, handheld or vehicle-mounted; or may be deployed on the water surface; or may be deployed on aircraft, balloons and satellites in the air. In the embodiments of the present disclosure, the scenes in which the network device and the terminal device are located are not limited.

It should be understood that all or part of the functions of the communication device in the present disclosure may also be implemented by software functionality running on hardware, or by virtualization functionality instantiated on a platform, such as a cloud platform.

The 5G, researched by the 3rd generation partnership project (3GPP), aims to meet people's pursuit of speed, latency, high-speed mobility and energy efficiency, and adapt to the diversity and complexity of services in future life. The main application scenarios of 5G include: enhanced mobile broadband (eMBB), ultra-reliable & low latency communications (URLLC), and massive machine type communication (mMTC).

eMBB aims to provide users with multimedia content, services, and data, and its demand is growing rapidly. On the other hand, eMBB may be deployed in different scenarios, such as indoor, urban areas, rural areas, and the like, the differences in capabilities and requirements are relatively large, so a one-size-fits-all approach is not applicable, and detailed analysis must be performed in combination with specific deployment scenarios. Typical applications of URLLC include: industrial automation, power automation, remote medial operations (surgery), traffic safety and security, and the like. Typical characteristics of mMTC include: high connection density, small data volume, delay-insensitive service, low cost and long service life of modules, and the like.

In some communication systems, such as NR systems, radio resource control (RRC) states may include an RRC idle state (RRC_IDLE), an RRC connected state (RRC_CONNECTED), an RRC inactive state (RRC_INACTIVE), and the like.

In RRC_IDLE, there is no RRC connection between the terminal device and the network device. The mobility of the terminal device is mainly reflected in cell selection/reselection based on the terminal device. In RRC_IDLE, the paging procedure for the terminal device by the network device is initiated by the core network (CN), and the paging area is configured by the CN. Further, in RRC_IDLE, the network device does not have access stratum (AS) context of the terminal device.

In RRC_CONNECTED, there is an RRC connection between the terminal device and the network device. Both the network device and the terminal device store the AS context of the terminal device. In RRC_CONNECTED, the location of the terminal device that the network device can learn is at the cell level. In RRC_CONNECTED, unicast data can be transmitted between the terminal device and the network device, and the mobility of the terminal device is managed and controlled by the network device.

RRC_INACTIVE is a new RRC state defined by some systems, such as NR systems. RRC_INACTIVE may reduce air interface signaling in the communication system. In addition, the terminal device in RRC_INACTIVE can quickly resume the wireless connection and quickly resume the data traffic.

In RRC_INACTIVE, there is a connection between CN-NR. The AS context of the terminal device is stored on a network device. Further, in RRC_INACTIVE, the paging procedure for the terminal device by the network device may be triggered by the radio access network (RAN), and the RAN-based paging area may be managed by the RAN. Further, in RRC_INACTIVE, the location of the terminal device that the network device can learn is at the RAN-based paging area level, and the mobility of the terminal device is mainly reflected in cell selection/reselection based on the terminal device.

### XR

With the development of technology, the research on XR/cloud gaming (CG) is becoming increasingly popular. Here, XR technologies mainly include: augmented reality (AR) technology, virtual reality (VR), and the like. A primary service of XR/CG is the video stream service. The arrival rate of a video stream can be measured in frames per second (fps). Exemplarily, the arrival rate of the video stream may be 30 fps, 60 fps, 90 fps, or 120 fps, or the like. Correspondingly, the period of the video stream may be 33.33 ms, 16.67 ms, 11.11 ms, or 8.33 ms.

Characteristics of XR data include a variable packet size, and/or a relatively large average packet size. Taking AR/VR with a data rate of 100Mbps as an example, the average size of uplink data packets can be 20833 bytes, the maximum size can be 31250 bytes, and the minimum size can be 10417 bytes. That is to say, for AR/VR with the data rate of 100 Mbps, the size of data packets to be transmitted in each period is between [10417 bytes, 31250 bytes]. In an actual system with 100 MHz bandwidth, transmission of a 20833-byte data packet requires transmission resources in approximately 4 time slots.

For the above situations, the related art supports configuring multiple physical uplink shared channel (PUSCH) occasions within a configured grant (CG) period for transmission of large XR data packets. In addition, multiple sets of CGs may also be configured for transmission of large XR data packets. When the amount of data in a certain data transmission is relatively small and it is not necessary to occupy multiple preconfigured PUSCH occasions, the terminal device may notify the base station of unused PUSCH occasions. The base station can reallocate the unused PUSCH occasions to other terminal devices for data transmission, thereby improving system efficiency.

Application layer data exchanged between a terminal device and an application server or a peer terminal device, such as AR/VR/CG/live video streaming, usually includes multiple types of data flows, such as voice, video, text, control information. These data flows typically require synchronization between the data flows. For example, data such as voice, video, subtitles need to be displayed to users synchronously. At present, the practice for video playback is to achieve synchronization among multiple data flows through the application layer, for example, caching received multiple data flows, extracting corresponding data frames from the multiple data flows based on the timestamps of the playback data flows and displaying them to the user synchronously.

A typical value of the frame rate for XR that the related art can support is one of 15 fps, 30 fps, 45 fps, 60 fps, 72 fps, 90 fps, and 120 fps, corresponding to traffic periods of 66.66 ms, 33.33 ms, 22.22 ms, 16.66 ms, 13.88 ms, 11.11 ms, and 8.33 ms, respectively. In practical applications, implementations of many XR applications can adjust the bit rate/frame rate in response to changes in connection quality or channel quality.

In summary, the characteristics of XR traffic may include: a non-integer XR traffic periodicity; a variable XR data rate; a quasi-periodic XR periodicity, hence enhancements would be beneficial in this area; presence of latency requirements, making it a latency-sensitive service.

Thus, it can be seen that some services experience changes in transmission rate (e.g., the frame rate or bit rate as described above). For this situation, in the related art, a communication device cannot respond to rate changes in time, which leads to the case that the communication device cannot respond to changes in connection quality, thereby resulting in poor user experience.

FIG. 2 is a flowchart of a wireless communication method provided by an embodiment of the present disclosure.

FIG. 2 may be performed by the first device and the second device. The first device may include the terminal device and/or the core network device described above. The second device may include a base station, a terminal device, and/or a core network device described above.

The method illustrated in FIG. 2 may include an operation S210.

In the operation S210, the first device transmits first information to the second device.

In some embodiments, in a case where the first device includes a terminal device and the second device includes a base station, the terminal device may transmit the first information to the base station. In some embodiments, in a case where the first device includes a core network device and the second device includes a base station, the core network device may transmit the first information to the base station. In some embodiments, in a case where the first device includes a core network device and the second device includes a terminal device, the core network device may transmit the first information to the terminal device. In some embodiments, in a case where the first device includes a terminal device and the second device includes a core network device, the terminal device may transmit the first information to the core network device. In some embodiments, in a case where the core network device receives the first information transmitted by the terminal device, the core network device may further transmit the first information or a message generated based on the first information to the base station device.

The first information may be related to a transmission rate. In some embodiments, the transmission rate may be a rate adjusted by an application. Here, the application may be an XR/CG application. In some embodiments, the transmission rate may be an arrival rate of a video stream. In some embodiments, the transmission rate may be a rate recommended or determined by the first device, or a rate required to be modified or required to be used, or a rate to be modified or to be used.

Information related to the transmission rate may include one or more of: historical information of the transmission rate, current information of the transmission rate, change information of the transmission rate, or initial information of the transmission rate.

The historical information of the transmission rate may include one or more of: historically obtained transmission rate(s) or historically reported transmission rate(s). The current information of the transmission rate may include: a currently available transmission rate.

The change information of the transmission rate may reflect a change situation of the transmission rate. The change information of the transmission rate may include one or more of: a change situation between a currently available transmission rate and a historically reported transmission rate, or a change situation between a currently available transmission rate and a historically obtained transmission rate.

The initial information of the transmission rate may be information of an available transmission rate obtained by the first device for the first time, or the initial information of the transmission rate may be information of the first available transmission rate obtained by the first device, or the initial information of the transmission rate may be information of a default or predefined stored rate, or the initial information of the transmission rate may be information of an available transmission rate obtained by the first device before reporting the first information. The current information of the transmission rate may be used to indicate the latest transmission rate obtained by the first device, or the most recently available transmission rate.

Through the first information, the second device may obtain information related to the transmission rate. In some embodiments, when the first information includes the change information of the transmission rate, the second device may directly obtain an adjustment situation of the transmission rate through the change information of the transmission rate. In some embodiments, when the first information includes the current information of the transmission rate, the second device may determine an adjustment situation of the transmission rate based on the currently received first information and the historically received first information. In some embodiments, when the first information includes the initial information of the transmission rate and the current information of the transmission rate, the second device may determine an adjustment situation of the transmission rate based on the initial information and the current information.

In some embodiments, the transmission rate may include, but is not limited to, one or more of: bit rate, frame rate, packet size, packet rate, bandwidth, or transmission efficiency.

In some embodiments, the first information may indicate information related to the transmission rate. The information related to the transmission rate may include one or more of: an adjustment situation of the transmission rate, a current transmission rate, a historical transmission rate, a recommended or determined rate, a rate required to be modified or required to be used, or a rate to be modified or to be used.

Exemplarily, the first information may include one or more of: a recommended or determined rate, a rate required to be modified or required to be used, or a rate to be modified or to be used. The first information may be used to indicate one or more of: a rate required by the first device, a determined rate, a modified rate result. As a recipient of the first information, the first information may be used to perform one or more of: obtaining the rate information, performing rate adjustment, or performing system resource allocation or transmission.

It should be noted that since the communication device can obtain the adjustment situation of the transmission rate through the first information, in some embodiments, the first information may also be referred to as rate adjustment information.

Optionally, when the transmission rate changes regularly, the first information may indicate one or more of the following information of the transmission rate: a usage time point, a usage duration, a usage order, a usage pattern, a period of the usage pattern, or a start time of the usage pattern. Here, the regular change may include: a periodic change, a predictable change, and/or the like.

It should be noted that the transmission rate may include one or more of: a transmission rate for a terminal device, transmission rate(s) for one or more quality of service (QoS) flows, transmission rate(s) for one or more data flows, transmission rate(s) for one or more protocol data unit (PDU) sessions, or transmission rate(s) for one or more data radio bearers (DRBs). That is, the first information may indicate at one or more granularities of: a terminal device, QoS flow(s), data flow(s), PDU session(s), or DRB(s).

When certain information (including one or more of the first information and second information described later, third information described later, or the like) is at a granularity of a terminal device, the information may include an index of the terminal device and corresponding information. When certain information is at a granularity of QoS flow(s), the information may include identifier(s) of one or more QoS flows and corresponding information. In some embodiments, the identifiers of the multiple QoS flows may constitute an identifier list, or the identities of the QoS flows may be represented in the form of a QoS flow bitmap. When certain information is at a granularity of DRB(s), the information may include identifier(s) of one or more DRBs and corresponding information. In some embodiments, the identities of the multiple DRBs may constitute an identifier list, or the identities of the DRBs may be represented in the form of a DRB bitmap. When certain information is at a granularity of data flow(s), the information may include identifier(s) of one or more data flows and corresponding information. In some embodiments, the identities of the multiple data flows may constitute an identifier list, or the identities of the data flows may be represented in the form of a data flow bitmap. When certain information is at a granularity of PDU session(s), the information may include identifier(s) of one or more PDU sessions and corresponding information. In some embodiments, the identifiers of the multiple PDU sessions may constitute an identifier list, or the identifiers of the PDU sessions may be represented in the form of a PDU session bitmap. It can be understood that based on different granularities, information reporting or triggering can be realized from different perspectives or with different refinement levels.

In some embodiments, when the first information is related to a transmission rate for a terminal device, the first information may include an index of the terminal device and corresponding information related to the transmission rate. In some embodiments, when the first information is related to transmission rate(s) for one or more QoS flows, the first information may include identifier(s) of the one or more QoS flows (in some embodiments, the identifiers of the multiple QoS flows may include an identifier list, or the identifiers of the QoS flows may be represented in the form of a QoS flow bitmap) and corresponding information related to the transmission rate(s). Here, the multiple QoS flows may correspond one-to-one with the information related to the transmission rates, or the multiple QoS flows may collectively correspond to the information related to the transmission rate. In some embodiments, when the first information is related to transmission rate(s) for one or more DRBs, the first information may include identifier(s) of the one or more DRBs (e.g., the identifiers of the multiple DRBs may include an identifier list, or the identifiers of the DRBs may be represented in the form of a DRB bitmap) and corresponding information related to the transmission rate(s). Here, the multiple DRBs may correspond one-to-one with the information related to the transmission rates, or the multiple DRBs may collectively correspond to the information related to the transmission rate. In some embodiments, when the first information is related to transmission rate(s) for one or more PDU sessions, the first information may include identifier(s) of the one or more PDU sessions (in some embodiments, the identifiers of the multiple PDU sessions may include an identifier list, or the identifiers of the PDU sessions may be represented in the form of a PDU session bitmap) and corresponding information related to the transmission rate(s). Here, the multiple PDU sessions may correspond one to one with the information related to the transmission rates, or the multiple PDU sessions may collectively correspond to the information related to the transmission rate. In some embodiments, when the first information is related to transmission rate(s) for one or more data flows, the first information may include identifier(s) of the one or more data flows (in some embodiments, the identifiers of the multiple data flows may include an identifier list, or the identifiers of the data flows may be represented in the form of a data flow bitmap) and corresponding information related to the transmission rate(s). Here, the multiple data flows may correspond one-to-one with the information related to the transmission rates, or the multiple data flows may collectively correspond to the information related to the transmission rate. It is noted that in the present disclosure, if the first information at a granularity of a certain QoS flow or certain QoS flows is reported, the first information at a granularity of other QoS flow(s) may or may not be reported. If the first information at a granularity of a certain DRB or certain DRBs is reported, the first information at a granularity of other DRB(s) may or may not be reported. If the first information at a certain type of granularity is reported, the first information at another type of granularity may or may not be reported. In some embodiments, if the first information at a granularity of a terminal device is reported, the first information at a granularity of QoS flow(s) and/or DRB(s) may or may not be reported.

In some embodiments, the first device may transmit second information to the second device. The second information may be used to indicate whether the first device supports reporting of the first information. In some embodiments, when the first device includes a terminal device and the second device includes a base station, the terminal device may transmit the second information to the base station to indicate whether the terminal device supports reporting of the first information. In some embodiments, when the first device includes a terminal device and the second device includes a core network device, the terminal device may transmit the second information to the core network device to indicate whether the terminal device supports reporting of the first information.

In the present disclosure, the core network device may include at least one of: a UPF, an SMF, an application function (AF), or a policy control function (PCF).

In some embodiments, the operation that the first device transmits the first information to the second device may include: when the first device obtains the first information, the first device may transmit the first information to the second device; when the first information is available or valid, the first device may transmit the first information to the second device; the first device may periodically transmit the first information to the second device; in response to the first condition being satisfied, the first device may transmit the first information to the second device.

In some embodiments, the second device may transmit a first request to the first device, where the first request may be used to request the first information or enable transmission of the first information. In response to the second device requesting the first information or enabling transmission of the first information, the first device may transmit the first information to the second device. That is to say, when the second device does not request transmission of the first information, the first device may not transmit the first information to the second device; when the second device requests transmission of the first information, the first device may transmit the first information to the second device.

It should be noted that the embodiments in which the first device transmits the first information provided in the present disclosure can be implemented in combination. In some embodiments, in response to the second device requesting the first information, and when the first device obtains the first information, the first device may transmit the first information to the second device; in response to the second device requesting the first information, and when the first information is available or valid, the first device may transmit the first information to the second device; in response to the second device requesting the first information, the first device may periodically transmit the first information to the second device; in response to the second device requesting the first information, and the first condition is satisfied, the first device may transmit the first information to the second device.

In some embodiments, in response to the second device enabling transmission of the first information, the first device may transmit the first information to the second device. That is to say, when the second device does not enable the first device to transmit the first information, the first device may not transmit the first information to the second device; when the second device enables the first device to transmit the first information, the first device may transmit the first information to the second device.

It should be noted that the embodiments in which the first device transmits the first information provided in the present disclosure can be implemented in combination. In some embodiments, in response to the second device triggering or enabling the first device to transmit the first information, and when the first device obtains the first information, the first device may transmit the first information to the second device; in response to the second device triggering or enabling the first device to transmit the first information, and when the first information is available or valid, the first device may transmit the first information to the second device; in response to the second device triggering or enabling the first device to transmit the first information, the first device may periodically transmit the first information to the second device; in response to the second device triggering or enabling the first device to transmit the first information, and the first condition is satisfied, the first device may transmit the first information to the second device.

In some embodiments, the second device may transmit the third information to the first device. The third information may be used to trigger or enable the first device to transmit the first information. In other words, through the third information, the second device may instruct the first device to report the first information.

Exemplarily, the third information may be carried in an RRC message. In some embodiments, the third information may be carried in other configuration information in the RRC message.

In some embodiments, the third information may satisfy one or more of: the third information is used to trigger or enable the first device to transmit the first information for a terminal device; the third information is used to trigger or enable the first device to transmit the first information for at least one QoS flow; the third information is used to trigger or enable the first device to transmit the first information for a specific QoS flow; the third information is used to trigger or enable the first device to transmit the first information for at least one data flow; the third information is used to trigger or enable the first device to transmit the first information for a specific data flow; the third information to trigger or enable the first device to transmit the first information for at least one PDU session; the third information is used to trigger or enable the first device to transmit the first information for a specific PDU session; the third information is used to trigger or enable the first device to transmit the first information for at least one DRB; or the third information is used to trigger or enable the first device to transmit the first information for a specific DRB.

It should be noted that in some embodiments, the specific QoS flow may belong to at least one QoS flow. The specific data flow may belong to at least one data flow. The specific PDU session may belong to least one PDU session. The specific DRB may belong to at least one DRB. In some embodiments, the specific QoS flow may be replaced with at least one QoS flow, i.e., the specific QoS flow may include one or more QoS flows. In some embodiments, the specific data flow may be replaced with at least one data flow, i.e., the specific data flow may include one or more data flows. In some embodiments, the specific PDU session may be replaced with at least one PDU session, i.e., the specific PDU session may include one or more data flows. In some embodiments, the specific DRB may be replaced with at least one DRB, i.e., the specific DRB may include one or more DRBs.

Thus, the third information can trigger or enable reporting of the first information at one or more granularities of QoS flow(s), PDU session(s), data flow(s), or DRB flow(s), thereby achieving refined reporting of the first information at various granularities. In addition, the third information may trigger reporting of the first information at multiple granularities, so that the second device may obtain the first information at multiple granularities via the third information. In some embodiments, the third information may be used to trigger the first device to transmit the first information for a first QoS flow and the first information for a first DRB. In some embodiments, the third information may be used to trigger the first device to transmit first information for multiple QoS flows, first information for a first PDU session, and first information for multiple data flows.

In some embodiments, when the first condition is satisfied, the first device may transmit the first information to the second device. In some embodiments, if the first condition is satisfied, then the first device transmits the first information to the second device when the first information is obtained by the first device or when the first information is available or valid. In some embodiments, if the first condition is satisfied, then the first device transmits the first information to the second device in response to the second device requesting the first information or enabling transmission of the first information.

In some embodiments, the first condition may be related to one or more of: a reporting prohibit timer corresponding to the first information, the transmission rate, or a historical reporting situation of the first information. Here, the historical reporting situation of the first information may include one or more of: whether the first device has reported the first information, or the number of times that the first device has historically reported the first information. The transmission rate may include one or more of: change information of the transmission rate, historical information of the transmission rate, or current information of the transmission rate.

In some embodiments, the first condition may include that: the reporting prohibit timer expires or is not running.

In some embodiments, a configuration granularity of the reporting prohibit timer is one of: a terminal device granularity, a QoS flow granularity, a data flow granularity, a PDU session granularity, or a DRB granularity.

In some embodiments, an operation or usage granularity of the reporting prohibit timer is one of: a terminal device granularity, a QoS flow granularity, a data flow granularity, a PDU session granularity, or a DRB granularity.

In some embodiments, the operation or usage granularity of the reporting prohibit timer is the same as or different from the configuration granularity of the reporting prohibit timer.

In some embodiments, the operation or usage granularity of the reporting prohibit timer is the same as or different from the reporting/transmission granularity of the first information.

In some embodiments, the configuration granularity of the reporting prohibit timer may be the same as or different from the reporting/transmission granularity of the first information.

In some embodiments, the reporting prohibit timer may be at a terminal device granularity. When the reporting prohibit timer corresponding to a terminal device has not expired, the first device cannot transmit the first information at the terminal device granularity. When the reporting prohibit timer corresponding to the terminal device expires or is not running, the first device may transmit the first information at the terminal device granularity.

In some embodiments, the reporting prohibit timer may be at a QoS flow granularity. When the reporting prohibit timer corresponding to a QoS flow has not expired, the first device cannot transmit the first information at the QoS flow granularity. When the reporting prohibit timer corresponding to the QoS flow expires or is not running, the first device may transmit the first information at the QoS flow granularity.

It should be noted that in a case where the reporting prohibit timer corresponding to a first QoS flow expires, if the reporting prohibit timer corresponding to a second QoS flow has not expired, the first device may not transmit the first information corresponding to the second QoS flow, or the first device may report both the first information corresponding to the second QoS flow and the first information corresponding to the first QoS flow.

In some embodiments, the reporting prohibit timer may be at a DRB granularity. When the reporting prohibit timer corresponding to a DRB has not expired, the first device cannot transmit the first information at the DRB granularity. When the reporting prohibit timer corresponding to the DRB expires or is not running, the first device may transmit the first information at the DRB granularity.

It should be noted that in a case where the reporting prohibit timer corresponding to a first DRB expires, if the reporting prohibit timer corresponding to a second DRB has not expired, the first device may not transmit the first information corresponding to the second DRB, or the first device may report both the first information corresponding to the second DRB and the first information corresponding to the first DRB.

In some embodiments, the reporting prohibit timer may be at a PDU session granularity. When the reporting prohibit timer corresponding to a PDU session has not expired, the first device cannot transmit the first information at the PDU session granularity. When the reporting prohibit timer corresponding to the PDU session expires or is not running, the first device may transmit the first information at the PDU session granularity.

It should be noted that in a case where the reporting prohibit timer corresponding to a first PDU session expires, if the reporting prohibit timer corresponding to a second PDU session has not expired, the first device may not transmit the first information corresponding to the second PDU session, or report both.

In some embodiments, the reporting prohibit timer may be at a data flow granularity. When the reporting prohibit timer corresponding to a data flow has not expired, the first device cannot transmit the first information at the data flow granularity. When the reporting prohibit timer corresponding to the data flow expires or is not running, the first device may transmit the first information at the data flow granularity.

It should be noted that in a case where the reporting prohibit timer corresponding to a first data flow expires, if the reporting prohibit timer corresponding to a second data flow has not expired, the first device may not transmit the first information corresponding to the second data flow, or report both.

In some embodiments, the first condition may include that: the first information has never been reported.

In some embodiments, if the first device has not yet reported the first information for the terminal device, the first device may transmit the first information for the terminal device. In some embodiments, if the first device has not yet reported the first information for the QoS flow(s), the first device may transmit the first information for the QoS flow(s). In some embodiments, if the first device has not yet reported the first information for the DRB(s), the first device may transmit the first information for the DRB(s). In some embodiments, if the first device has not yet reported the first information for the PDU session(s), the first device may transmit the first information for the PDU session(s). In some embodiments, if the first device has not yet reported the first information for the data flow(s), the first device may transmit the first information for the data flow(s).

It should be noted that if the first device has not yet reported the first information for a first QoS flow and has reported the first information for a second QoS flow, the first device may transmit the first information for the first QoS flow and not transmit the first information corresponding to the second QoS flow, or the first device may report both the first information for the second QoS flow and the first information for the first QoS flow. Further, if the first device has not yet reported the first information for a first DRB and has reported the first information for a second DRB, the first device may transmit the first information for the first DRB and not transmit the first information corresponding to the second DRB, or the first device may report both the first information for the second DRB and the first information for the first DRB. Further, if the first device has not yet reported the first information for a first PDU session and has reported the first information for a second PDU session, the first device may transmit the first information for the first PDU session and not transmit the first information corresponding to the second PDU session, or the first device may report both the first information for the second PDU session and the first information for the first PDU session. Further, if the first device has not yet reported the first information for a first data flow and has reported the first information for a second data flow, the first device may transmit the first information for the first data flow and not transmit the first information corresponding to the second data flow, or the first device may report both the first information for the second data flow and the first information for the first data flow.

In some embodiments, the first condition may include that: the second device enables transmission of the first information, and the first device has not yet reported the first information.

In some embodiments, if the second device enables the first device to transmit the first information, and the first device has not yet reported the first information for the terminal device, the first device may transmit the first information for the terminal device. In some embodiments, if the second device enables the first device to transmit the first information, and the first device has not yet reported the first information for the QoS flow(s), the first device may transmit the first information for the QoS flow(s), or the first device may transmit the valid first information for the QoS flow(s), or the first device may transmit the first information for the QoS flow(s) when it obtains the valid first information. In some embodiments, if the second device enables the first device to transmit the first information, and the first device has not yet reported the first information for the DRB(s), the first device may transmit the first information for the DRB(s), or the first device may transmit the valid first information for the DRB(s), or the first device may transmit the first information for the DRB(s) when it obtains the valid first information. In some embodiments, if the second device enables the first device to transmit the first information, and the first device has not yet reported the first information for the PDU session(s), the first device may transmit the first information for the PDU session(s), or the first device may transmit the valid first information for the PDU session(s), or the first device may transmit the first information for the PDU session(s) if it obtains the valid first information. In some embodiments, if the second device enables the first device to transmit the first information, and the first device has not yet reported the first information for the data flow(s), the first device may transmit the first information for the data flow(s), or the first device may transmit the valid first information for the data flow(s), or the first device may transmit the first information for the data flow(s) if it obtains the valid first information.

It should be noted that if the second device enables transmission of the first information, and the first device has not yet reported the first information for a first QoS flow and has reported the first information for a second QoS flow, the first device may transmit the first information corresponding to the first QoS flow and not transmit the first information corresponding to the second QoS flow, or the first device may report both the first information for the second QoS flow and the first information for the first QoS flow. In addition, if the second device enables transmission of the first information, and the first device has not yet reported the first information for a first DRB and has reported the first information for a second DRB, the first device may transmit the first information corresponding to the first DRB and not transmit the first information corresponding to the second DRB, or the first device may report both the first information for the second DRB and the first information for the first DRB. In addition, if the second device enables transmission of the first information, and the first device has not yet reported the first information for a first PDU session and has reported the first information for a second PDU session, the first device may transmit the first information corresponding to the first PDU session and not transmit the first information corresponding to the second PDU session, or the first device may report both the first information for the second PDU session and the first information for the first PDU session. In addition, if the second device enables transmission of the first information, and the first device has not yet reported the first information for a first data flow and has reported the first information for a second data flow, the first device may transmit the first information corresponding to the first data flow and not transmit the first information corresponding to the second data flow, or the first device may report both the first information for the second data flow and the first information for the first data flow.

In some embodiments, the first condition may include that: the transmission rate changes, or the transmission rate is required to be updated, or a previously recommended transmission rate is not applicable.

In some embodiments, if the transmission rate at a terminal device granularity changes, the first device may transmit the first information for a terminal device. In some embodiments, if the transmission rate at a QoS flow granularity changes, the first device may transmit the first information for QoS flow(s). In some embodiments, if the transmission rate at a DRB granularity changes, the first device may transmit the first information for DRB(s). In some embodiments, if the transmission rate at a PDU session granularity changes, the first device may transmit the first information for PDU session(s). In some embodiments, if the transmission rate at a data flow granularity changes, the first device may transmit the first information for data flow(s).

It should be noted that if the transmission rate corresponding to a first QoS flow changes and the transmission rate corresponding to a second QoS flow does not change, the first device may not transmit the first information corresponding to the second QoS flow, or the first device may report both the first information for the second QoS flow and the first information for the first QoS flow. Further, if the transmission rate corresponding to a first DRB changes and the transmission rate corresponding to a second DRB does not change, the first device may not transmit the first information corresponding to the second DRB, or the first device may report both the first information for the second DRB and the first information for the first DRB. If the transmission rate corresponding to a first PDU session changes and the transmission rate corresponding to a second PDU session does not change, the first device may not transmit the first information corresponding to the second PDU session, or the first device may report both the first information for the second PDU session and the first information for the first PDU session. In addition, if the transmission rate corresponding to a first data flow changes and the transmission rate corresponding to a second data flow does not change, the first device may not transmit the first information corresponding to the second data flow, or the first device may report both the first information for the second data flow and the first information for the first data flow.

In some embodiments, the first condition may include that: a change exists between a currently available transmission rate and a previously reported transmission rate. The currently available transmission rate includes a transmission rate that can be obtained by the first device or a latest obtained transmission rate. The previously reported transmission rate may include: a transmission rate related to historically reported first information. In some embodiments, the previously reported transmission rate may include a transmission rate related to the first information transmitted last time.

In some embodiments, if a change exists between the currently available transmission rate at a terminal device granularity and the previously reported transmission rate at the terminal device granularity, the first device may transmit the first information for a terminal device. In some embodiments, if a change exists between the currently available transmission rate at a QoS flow granularity and the previously reported transmission rate at the QoS flow granularity, the first device may transmit the first information for QoS flow(s). In some embodiments, if a change exists between the currently available transmission rate at a DRB granularity and the previously reported transmission rate at the DRB granularity, the first device may transmit the first information for DRB(s). In some embodiments, if a change exists between the currently available transmission rate at a PDU session granularity and the previously reported transmission rate at the PDU session granularity, the first device may transmit the first information for PDU session(s). In some embodiments, if a change exists between the currently available transmission rate at a data flow granularity and the previously reported transmission rate at the data flow granularity, the first device may transmit the first information for data flow(s).

It should be noted that if a change occurs between the transmission rate corresponding to a first QoS flow and the previously reported transmission rate corresponding to the first QoS flow, and no change occurs between the transmission rate corresponding to a second QoS flow and the previously reported transmission rate corresponding to the second QoS flow, the first device may not transmit the first information corresponding to the second QoS flow, or the first device may report both the first information for the second QoS flow and the first information for the first QoS flow. Further, if a change occurs between the transmission rate corresponding to a first DRB and the previously reported transmission rate corresponding to the first QoS, and no change occurs between the transmission rate corresponding to a second DRB and the previously reported transmission rate corresponding to the second QoS, the first device may not transmit the first information corresponding to the second DRB, or the first device may report both the first information for the second DRB and the first information for the first DRB. Further, if a change occurs between the transmission rate corresponding to a first PDU session and the previously reported transmission rate corresponding to the first QoS, and no change occurs between the transmission rate corresponding to a second PDU session and the previously reported transmission rate corresponding to the second QoS, the first device may not transmit the first information corresponding to the second PDU session, or the first device may report both the first information for the second PDU session and the first information for the first PDU session. Further, if a change occurs between the transmission rate corresponding to a first data flow and the previously reported transmission rate corresponding to the first QoS flow, and no change occurs between the transmission rate corresponding to a second data flow and the previously reported transmission rate corresponding to the second QoS flow, the first device may not transmit the first information corresponding to the second data flow, or the first device may report both the first information for the second data flow and the first information for the first data flow.

In some embodiments, the first condition may include that: a change exists between a previously recommended or reported transmission rate and a currently required transmission rate. The currently required transmission rate includes a transmission rate that can be expected by the first device or a latest required transmission rate. The previously recommended or reported transmission rate may include a transmission rate related to historically recommended or reported first information. In some embodiments, the previously recommended or reported transmission rate may include a transmission rate related to the first information transmitted last time.

In some embodiments, if a change exists between the currently required transmission rate at a terminal device granularity and the previously reported transmission rate at the terminal device granularity, the first device may transmit the first information for a terminal device. In some embodiments, if a change exists between the currently required transmission rate at a QoS flow granularity and the previously reported transmission rate at the QoS flow granularity, the first device may transmit the first information for QoS flow(s). In some embodiments, if a change exists between the currently required transmission rate at a DRB granularity and the previously reported transmission rate at the DRB granularity, the first device may transmit the first information for DRB(s). In some embodiments, if a change exists between the currently required transmission rate at a PDU session granularity and the previously reported transmission rate at the PDU session granularity, the first device may transmit the first information for PDU session(s). In some embodiments, if a change exists between the currently required transmission rate at a data flow granularity and the previously reported transmission rate at the data flow granularity, the first device may transmit the first information for data flow(s).

It should be noted that if a change occurs between the transmission rate corresponding to a first QoS flow and the previously reported transmission rate corresponding to the first QoS flow, and no change occurs between the transmission rate corresponding to a second QoS flow and the previously reported transmission rate corresponding to the second QoS flow, the first device may not transmit the first information corresponding to the second QoS flow, or the first device may report both the first information for the second QoS flow and the first information for the first QoS flow. Further, if a change occurs between the transmission rate corresponding to a first DRB and the previously reported transmission rate corresponding to the first DRB, and no change occurs between the transmission rate corresponding to a second DRB and the previously reported transmission rate corresponding to the second QoS, the first device may not transmit the first information corresponding to the second DRB, or the first device may report both the first information for the second DRB and the first information for the first DRB. Further, if a change occurs between the transmission rate corresponding to a first PDU session and the previously reported transmission rate corresponding to the first PDU session, and no change occurs between the transmission rate corresponding to a second PDU session and the previously reported transmission rate corresponding to the second PDU session, the first device may not transmit the first information corresponding to the second PDU session, or the first device may report both the first information for the second PDU session and the first information for the first PDU session. Further, if a change occurs between the transmission rate corresponding to a first data flow and the previously reported transmission rate corresponding to the first data flow, and no change occurs between the transmission rate corresponding to a second data flow and the previously reported transmission rate corresponding to the second data flow, the first device may not transmit the first information corresponding to the second data flow, or the first device may report both the first information for the second data flow and the first information for the first data flow.

In some embodiments, the first condition may include that: a change between a currently available transmission rate and a previously reported transmission rate is greater than or equal to a first threshold.

In some embodiments, if a change between the currently available transmission rate at a terminal device granularity and the previously reported transmission rate at the terminal device granularity is greater than or equal to the first threshold, the first device may transmit the first information for a terminal device. In some embodiments, if a change between the currently available transmission rate at a QoS flow granularity and the previously reported transmission rate at the QoS flow granularity is greater than or equal to the first threshold, the first device may transmit the first information for QoS flow(s). In some embodiments, if a change between the currently available transmission rate at a DRB granularity and the previously reported transmission rate at the DRB granularity is greater than or equal to the first threshold, the first device may transmit the first information for DRB(s). In some embodiments, if a change between the currently available transmission rate at a PDU session granularity and the previously reported transmission rate at the PDU session granularity is greater than or equal to the first threshold, the first device may transmit the first information for PDU session(s). In some embodiments, if a change between the currently available transmission rate at a data flow granularity and the previously reported transmission rate at the data flow granularity is greater than or equal to the first threshold, the first device may transmit the first information for data flow(s).

It should be noted that if a change between the transmission rate corresponding to a first QoS flow and the previously reported transmission rate corresponding to the first QoS flow is greater than or equal to the first threshold, and a change between the transmission rate corresponding to a second QoS flow and the previously reported transmission rate corresponding to the second QoS flow is not greater than or equal to the first threshold, the first device may not transmit the first information corresponding to the second QoS flow, or the first device may report both the first information for the second QoS flow and the first information for the first QoS flow. Further, if a change between the transmission rate corresponding to a first DRB and the previously reported transmission rate corresponding to the first DRB is greater than or equal to the first threshold, and a change between the transmission rate corresponding to a second DRB and the previously reported transmission rate corresponding to the second DRB is not greater than or equal to the first threshold, the first device may not transmit the first information corresponding to the second DRB, or the first device may report both the first information for the second DRB and the first information for the first DRB. Further, if a change between the transmission rate corresponding to a first PDU session and the previously reported transmission rate corresponding to the first QoS is greater than or equal to the first threshold, and a change between the transmission rate corresponding to a second PDU session and the previously reported transmission rate corresponding to the second QoS is not greater than or equal to the first threshold, the first device may not transmit the first information corresponding to the second PDU session, or the first device may report both the first information for the second PDU session and the first information for the first PDU session. Further, if a change between the transmission rate corresponding to a first data flow and the previously reported transmission rate corresponding to the first data flow is greater than or equal to the first threshold, and a change between the transmission rate corresponding to a second data flow and the previously reported transmission rate corresponding to the second data flow is not greater than or equal to the first threshold, the first device may not transmit the first information corresponding to the second data flow, or the first device may report both the first information for the second data flow and the first information for the first data flow.

In some embodiments, the first condition may include that: a change between a currently required or recommended transmission rate and a previously reported or recommended transmission rate is greater than or equal to a first threshold.

In some embodiments, if a change between the currently required or recommended transmission rate at a terminal device granularity and the previously reported or recommended transmission rate at the terminal device granularity is greater than or equal to the first threshold, the first device may transmit the first information for a terminal device. In some embodiments, if a change between the currently required or recommended transmission rate at a QoS flow granularity and the previously reported or recommended transmission rate at the QoS flow granularity is greater than or equal to the first threshold, the first device may transmit the first information for QoS flow(s). In some embodiments, if a change between the currently required or recommended transmission rate at a DRB granularity and the previously reported or recommended transmission rate at the DRB granularity is greater than or equal to the first threshold, the first device may transmit the first information for DRB(s). In some embodiments, if a change between the currently required or recommended transmission rate at a PDU session granularity and the previously reported or recommended transmission rate at the PDU session granularity is greater than or equal to the first threshold, the first device may transmit the first information for PDU session(s). In some embodiments, if a change between the currently required or recommended transmission rate at a data flow granularity and the previously reported or recommended transmission rate at the data flow granularity is greater than or equal to the first threshold, the first device may transmit the first information for data flow(s).

It should be noted that if a change between the transmission rate corresponding to a first QoS flow and the previously reported or recommended transmission rate corresponding to the first QoS flow is greater than or equal to the first threshold, and a change between the transmission rate corresponding to a second QoS flow and the previously reported or recommended transmission rate corresponding to the second QoS flow is not greater than or equal to the first threshold, the first device may not transmit the first information corresponding to the second QoS flow, or the first device may report both the first information for the second QoS flow and the first information for the first QoS flow. Further, if a change between the transmission rate corresponding to a first DRB and the previously reported or recommended transmission rate corresponding to the first DRB is greater than or equal to the first threshold, and a change between the transmission rate corresponding to a second DRB and the previously reported or recommended transmission rate corresponding to the second DRB is not greater than or equal to the first threshold, the first device may not transmit the first information corresponding to the second DRB, or the first device may report both the first information for the second DRB and the first information for the first DRB. Further, if a change between the transmission rate corresponding to a first PDU session and the previously reported or recommended transmission rate corresponding to the first QoS is greater than or equal to the first threshold, and a change between the transmission rate corresponding to a second PDU session and the previously reported or recommended transmission rate corresponding to the second QoS is not greater than or equal to the first threshold, the first device may not transmit the first information corresponding to the second PDU session, or the first device may report both the first information for the second PDU session and the first information for the first PDU session. Further, if a change between the transmission rate corresponding to a first data flow and the previously reported or recommended transmission rate corresponding to the first data flow is greater than or equal to the first threshold, and a change between the transmission rate corresponding to a second data flow and the previously reported or recommended transmission rate corresponding to the second data flow is not greater than or equal to the first threshold, the first device may not transmit the first information corresponding to the second data flow, or the first device may report both the first information for the second data flow and the first information for the first data flow.

In some embodiments, the first condition may include that: a change of a currently available transmission rate relative to a historical transmission rate is greater than or equal to a first threshold. The historical transmission rate may include a transmission rate obtained by the first device before a current moment. It will be appreciated that the first device does not necessarily transmit the first information every time the first device obtains a transmission rate, and therefore, the historical transmission rate may not be a previously reported transmission rate.

In some embodiments, if a change between the currently available transmission rate at a terminal device granularity and the historical transmission rate at the terminal device granularity is greater than or equal to the first threshold, the first device may transmit the first information for a terminal device. In some embodiments, if a change between the currently available transmission rate at a QoS flow granularity and the historical transmission rate at the QoS flow granularity is greater than or equal to the first threshold, the first device may transmit the first information for QoS flow(s). In some embodiments, if a change between the currently available transmission rate at a DRB granularity and the historical transmission rate at the DRB granularity is greater than or equal to the first threshold, the first device may transmit the first information for DRB(s). In some embodiments, if a change between the currently available transmission rate at a PDU session granularity and the historical transmission rate at the PDU session granularity is greater than or equal to the first threshold, the first device may transmit the first information for PDU session(s). In some embodiments, if a change between the currently available transmission rate at a data flow granularity and the historical transmission rate at the data flow granularity is greater than or equal to the first threshold, the first device may transmit the first information for data flow(s).

It should be noted that if a change between the transmission rate corresponding to a first QoS flow and the historical transmission rate corresponding to the first QoS flow is greater than or equal to the first threshold, and a change between the transmission rate corresponding to a second QoS flow and the historical transmission rate corresponding to the second QoS flow is not greater than or equal to the first threshold, the first device may not transmit the first information corresponding to the second QoS flow, or the first device may report both the first information for the second QoS flow and the first information for the first QoS flow. Further, if a change between the transmission rate corresponding to a first DRB and the historical transmission rate corresponding to the first DRB is greater than or equal to the first threshold, and a change between the transmission rate corresponding to a second DRB and the historical transmission rate corresponding to the second DRB is not greater than or equal to the first threshold, the first device may not transmit the first information corresponding to the second DRB, or the first device may report both the first information for the second DRB and the first information for the first DRB. Further, if a change between the transmission rate corresponding to a first data flow and the historical transmission rate corresponding to the first data flow is greater than or equal to the first threshold, and a change between the transmission rate corresponding to a second data flow and the historical transmission rate corresponding to the second data flow is not greater than or equal to the first threshold, the first device may not transmit the first information corresponding to the second data flow, or the first device may report both the first information for the second data flow and the first information for the first data flow. Further, if a change between the transmission rate corresponding to a first PDU session and the historical transmission rate corresponding to the first PDU session is greater than or equal to the first threshold, and a change between the transmission rate corresponding to a second PDU session and the historical transmission rate corresponding to the second PDU session is not greater than or equal to the first threshold, the first device may not transmit the first information corresponding to the second PDU session, or the first device may report both the first information for the second PDU session and the first information for the first PDU session.

In some embodiments, the first condition may include that: a change of a currently required transmission rate relative to a historically required transmission rate is greater than or equal to a first threshold. The historically required transmission rate may include a transmission rate required by the first device before a current moment. It will be appreciated that the first device does not necessarily transmit the first information every time the first device determines a required transmission rate, and therefore, the historically required transmission rate may not be a previously reported or recommended transmission rate.

In some embodiments, if a change between the currently required transmission rate at a terminal device granularity and the historically required transmission rate at the terminal device granularity is greater than or equal to the first threshold, the first device may transmit the first information for a terminal device. In some embodiments, if a change between the currently required transmission rate at a QoS flow granularity and the historically required transmission rate at the QoS flow granularity is greater than or equal to the first threshold, the first device may transmit the first information for QoS flow(s). In some embodiments, if a change between the currently required transmission rate at a DRB granularity and the historically required transmission rate at the DRB granularity is greater than or equal to the first threshold, the first device may transmit the first information for DRB(s). In some embodiments, if a change between the currently required transmission rate at a PDU session granularity and the historically required transmission rate at the PDU session granularity is greater than or equal to the first threshold, the first device may transmit the first information for PDU session(s). In some embodiments, if a change between the currently required transmission rate at a data flow granularity and the historically required transmission rate at the data flow granularity is greater than or equal to the first threshold, the first device may transmit the first information for data flow(s).

It should be noted that if a change between the required transmission rate corresponding to a first QoS flow and the historically required transmission rate corresponding to the first QoS flow is greater than or equal to the first threshold, and a change between the required transmission rate corresponding to a second QoS flow and the historically required transmission rate corresponding to the second QoS flow is not greater than or equal to the first threshold, the first device may not transmit the first information corresponding to the second QoS flow, or the first device may report both the first information for the second QoS flow and the first information for the first QoS flow. Further, if a change between the required transmission rate corresponding to a first DRB and the historically required transmission rate corresponding to the first DRB is greater than or equal to the first threshold, and a change between the required transmission rate corresponding to a second DRB and the historically required transmission rate corresponding to the second DRB is not greater than or equal to the first threshold, the first device may not transmit the first information corresponding to the second DRB, or the first device may report both the first information for the second DRB and the first information for the first DRB. Further, if a change between the required transmission rate corresponding to a first PDU session and the historically required transmission rate corresponding to the first PDU session is greater than or equal to the first threshold, and a change between the required transmission rate corresponding to a second PDU session and the historically required transmission rate corresponding to the second PDU session is not greater than or equal to the first threshold, the first device may not transmit the first information corresponding to the second PDU session, or the first device may report both the first information for the second PDU session and the first information for the first PDU session. Further, if a change between the required transmission rate corresponding to a first data flow and the historically required transmission rate corresponding to the first data flow is greater than or equal to the first threshold, and a change between the required transmission rate corresponding to a second data flow and the historically required transmission rate corresponding to the second data flow is not greater than or equal to the first threshold, the first device may not transmit the first information corresponding to the second data flow, or the first device may report both the first information for the second data flow and the first information for the first data flow.

For ease of understanding, the first condition will be described below with reference to Examples 1 to 6.

In Example 1: for QoS flow 1/DRB1, if the transmission rate has not been reported, or the reporting prohibit timer is not running, or a change occurs in reporting, then the first device may report the first information for QoS flow 1/DRB1. For QoS flow 2/DRB2, if the reporting prohibit timer has not expired or the first information for QoS flow 2/DRB2 has not been reported or no change occurs in the first information for QoS flow 2/DRB2, then the first information for QoS flow 2/DRB2 is not reported.

Example 2: for QoS flow 1/DRB1, if the transmission rate has not been reported, the reporting prohibit timer is not running, or a change occurs in reporting, then the information for QoS flow 1/DRB1 and the information for QoS flow 2/DRB2 may be reported, even if the reporting prohibit timer for QoS flow 2/DRB2 has not been expired, or the first information for QoS flow 2/DRB2 has not been reported, or no change occurs in the first information for QoS flow 2/DRB2.

In Example 3: for QoS flow 1/DRB1, if the transmission rate has not been reported, the reporting prohibit timer is not running, or a change occurs in reporting, then the information for QoS flow 1/DRB1 and the information for QoS flow 2/DRB2 may be reported, and in this case, the reporting prohibit timer for QoS flow 2/DRB2 expires, or the first information for QoS flow 2/DRB2 has not been reported.

In Example 4: for QoS flow 1, if the transmission rate has not been reported, or the reporting prohibit timer is not running, or a change occurs in reporting, then the first device may report the first information for QoS flow 1. For QoS flow 2, if the reporting prohibit timer has not expired or the first information for QoS flow 2 has not been reported or no change occurs in the first information for QoS flow 2, then the first information for QoS flow 2 is not reported.

In Example 5: for QoS flow 1, if the transmission rate has not been reported, the reporting prohibit timer is not running, or a change occurs in reporting, then the information for QoS flow 1 and the information for QoS flow 2 may be reported, even if the reporting prohibit timer for QoS flow 2 has not been expired, or the first information for QoS flow 2 has not been reported, or no change occurs in the first information for QoS flow 2.

In Example 6: for QoS flow 1, if the transmission rate has not been reported, the reporting prohibit timer is not running, or a change occurs in reporting, then the information for QoS flow 1 and the information for QoS flow 2 may be reported, and in this case, the reporting prohibit timer for QoS flow 2 expires, or the first information for QoS flow 2 has not been reported.

The present disclosure does not limit the manner in which the first device obtains the first information and/or the transmission rate. In some embodiments, obtaining of the first information and/or transmission rate may satisfy one or more of: being delivered from a first protocol layer of a terminal device to a second protocol layer of the terminal device; being obtained through implementation of the terminal device; being obtained through packet header information; being obtained through information exchanged with a core network; or, being obtained through interaction between an application (APP) of the terminal device and an application server. Here, the first protocol layer is higher than the second protocol layer. The first protocol layer may be, for example, a media access control (MAC) layer, and the second protocol layer may be, for example, a physical (PHY) layer. The packet header information may include information contained in a header of a packet transmitted between different protocol layers, and/or information contained in a header of a packet transmitted between different devices.

In alternative embodiments, the first information may be carried in one or more of: an RRC message, a non access stratum (NAS) message, a media access control control element (MAC CE), uplink control information (UCI), a physical uplink control channel (PUCCH), or a control plane (CP) message. Similarly, the second information or the third information may be carried in one or more of: an RRC message, a NAS message, a MAC CE, a UCI, a PUCCH, a control plane message.

Exemplarily, in a case where the first device includes a terminal device and the second device includes a base station, the first information may be carried in an uplink RRC message. The uplink RRC message may include a user equipment assistance information (UEassistanceinformation) message. In some embodiments, uplink traffic information (UL-TrafficInfo) may carry the first information. For example, the first information may be carried in protocol data unit session uplink traffic information (PDU-SessionUL-TrafficInfo) in the UL-TrafficInfo. The first information may be indicated in a QoS flow uplink traffic information (QOS-FlowUL-TrafficInfo) information element (IE) of the PDU-SessionUL-TrafficInfo in the UL-TrafficInfo, such as indicating the first information corresponding to a QoS class identifier (QCI) in the above IE. In some embodiments, a new UAI reporting content may be introduced in the UEassistanceinformation. In some embodiments, a new information element may be introduced to indicate the first information.

Exemplarily, in a sidelink (SL) communication scenario, in a case where the first device includes a terminal device and the second device includes a base station, the first information may be carried in sl-UE-AssistanceInformationNR or a newly added other UE assistance information IE; and/or the second information may be carried in sl-AssistanceConfigNR.

Exemplarily, in a case where the first device includes a terminal device and the second device includes a base station, the first information may be carried in an uplink NAS message. The uplink NAS message may include, for example, an uplink information transfer (ULinformationTransfer) message or other NAS messages.

Exemplarily, in a case where the first device includes a core network device and the second device includes a base station, the first information may be carried in a control plane message. The control plane message may include, for example, a time sensitive communication assistance information (TSCAI) message and/or a time sensitive communication assistance container (TSCAC) message. Since TSCAI is indicated based on a QoS flow, the first information corresponding to the QoS flow corresponding to the TSCAI may be added into the TSCAI information.

In some embodiments, the method illustrated in FIG. 2 may include an operation S220.

In the operation S220, the second device performs a first operation based on the first information.

The operation S210 and the operation S220 may be performed in combination or may be performed separately. In some embodiments, the second device may perform the first operation based on the first information received from the first device. In this case, the first information may be used to instruct the second device to perform the first operation based on the first information. In some embodiments, the second device may obtain the first information by itself, thereby performing the first operation. Exemplarily, the second device may include a terminal device, and the lower layer of the terminal device may obtain the transmission rate from the higher layer to determine the first information, and perform the first operation.

The first operation may be related to one or more of: transmission resources, transmission parameters, or scheduling. It can be understood that based on the first information, the second device can timely perform operations such as adjusting transmission parameters and/or scheduling transmission resources, so as to match the user's performance requirements in the case of adjustment of the transmission rate, and further improve the user experience.

The first operation may relate to one or more of: adjusting or determining a final transmission rate, transmission resources, transmission parameters, or scheduling. It can be understood that based on the first information, the second device may timely perform operations such as adjusting or determining a final transmission rate and/or adjusting transmission parameters and/or scheduling transmission resources, so as to match the user's performance requirements in the case of adjustment of the transmission rate, and thereby improve the user experience.

The first operation may be related to uplink transmission, downlink transmission, or sidelink transmission. In some embodiments, the first operation may be related to uplink transmission resource(s), downlink transmission resource(s), or SL transmission resource(s). In some embodiments, the first operation may be related to uplink transmission parameter(s), downlink transmission parameter(s), or sidelink transmission parameter(s). In some embodiments, the first operation may be related to uplink scheduling, downlink scheduling, or sidelink scheduling.

In some embodiments, the first operation may include one or more of: scheduling dynamic scheduling resources; adjusting a configured grant (CG); adjusting a semi-persistent scheduling (SPS) configuration; configuring a CG; configuring an SPS; configuring transmission parameters; adjusting transmission parameters; selecting a target transmission resource set from among one or more transmission resource sets; recommending a target transmission resource set from among the one or more transmission resource sets; selecting a target transmission parameter set from among one or more transmission parameter sets; recommending a target transmission parameter set from among the one or more transmission parameter sets; or selecting an available carrier or carrier set. Hereinafter, each of the above will be described below.

In possible embodiments, based on the first information, the second device may schedule a dynamic grant (DG). In some embodiments, the second device may update a DG configuration. In some embodiments, the second device may configure corresponding logical channel (LCH) configuration parameters and/or logical channel prioritization (LCP) mapping restrictions for the updated DG configuration. Here, the LCH configuration parameters and/or LCP mapping restrictions may include at least part of LCH parameters and/or LCP mapping restriction factors in the related protocols.

In possible embodiments, based on the first information, the second device may configure the CG and/or the SPS in one or more of the following manners: deleting a CG configuration, deleting an SPS configuration, modifying a CG configuration, modifying an SPS configuration, adding a CG configuration, or adding an SPS configuration. After configuring the CG and/or the SPS, an updated CG and/or SPS configuration may be obtained. In some embodiments, the second device may configure corresponding LCH configuration parameters and/or LCP mapping restrictions for the updated CG/SPS configuration. Here, the LCH configuration parameters and/or LCP mapping restrictions include at least part of the LCH parameters and/or LCP mapping restriction factors in the related protocols.

In possible embodiments, based on the first information, the second device may configure or adjust an available carrier or carrier set. In some embodiments, one or more of a carrier, a secondary cell (Scell), or a secondary cell group (SCG) may be activated or deactivated by RRC or MAC CE or DCI.

In possible embodiments, based on the first information, the second device may configure or adjust LCH configuration parameters. In some embodiments, the LCH configuration parameters may include at least part of LCH parameters in the related protocols.

In possible embodiments, the second device may configure or adjust LCP mapping restrictions. Here, the LCP mapping restrictions may include LCP mapping restrictions for CG/SPS/DG. In some embodiments, the LCP mapping restrictions may include at least part of LCP mapping restriction factors in the related protocols.

In some embodiments, the transmission parameters may include one or more of: one or more of LCH configuration parameters, one or more of PUSCH parameters, one or more of PUCCH parameters, one or more of physical downlink shared channel (PDSCH) parameters, one or more of packet data convergence protocol (PDCP) parameters, one or more of radio link control (RLC) parameters, or one or more of MAC configuration parameters. That is to say, based on the first information, the second device may adjust one or more of the following transmission parameters: one or more of the LCH configuration parameters, one or more of the PUSCH parameters, one or more of the PUCCH parameters, one or more of the PDSCH parameters, one or more of the PDCP parameters, one or more of the RLC parameters, or one or more of the MAC configuration parameters.

In some embodiments, the first device may receive fourth information transmitted by the second device. In some embodiments, the first device may transmit fourth information to the second device. That is to say, either the first device or the second device may indicate the fourth information to the opposite end or receive the fourth information transmitted by the opposite end. In some embodiments, when the first device includes a terminal device and the second device includes a base station, the first device may receive the fourth information transmitted by the second device. In some embodiments, when the first device includes a base station and the second device includes a terminal device, the first device may transmit the fourth information to the second device.

The fourth information may be used to indicate one or more of: the one or more transmission resource sets, the one or more transmission parameter sets, one or more carriers or SCells (e.g., required to be activated or deactivated, or to be configured or de-configured).

As described above, the first operation may include one or more of: selecting or recommending a target transmission resource set from among one or more transmission resource sets; selecting or recommending a target transmission parameter set from among one or more transmission parameter sets. Based on this, in conjunction with the fourth information indicating the one or more transmission resource sets and/or the one or more transmission parameter sets, the target transmission resource set may be selected or recommended based on the indication of the fourth information; and/or the target transmission parameter set may be selected or recommended based on the indication of the fourth information.

It should be noted that if the first operation includes selecting a target transmission resource set from among one or more transmission resource sets, the first device and/or the second device may use the target transmission resource set for transmission. If the first operation includes recommending a target transmission resource set from among one or more transmission parameter sets, the first device and/or the second device may determine transmission resources to be used for transmission with reference to the recommended target transmission resource set. If the first operation includes selecting a target transmission parameter set from among one or more transmission parameter sets, the first device and/or the second device may use the target transmission parameter set for transmission. If the first operation includes recommending a target transmission parameter set from among one or more transmission parameter sets, the first device and/or the second device may determine transmission parameters to be used for transmission with reference to the recommended target transmission parameter set.

It should be noted that a transmission resource set may correspond to a certain transmission rate or certain transmission rates. Exemplarily, the one or more transmission resource sets may include a first transmission resource set. The first transmission resource set may correspond to a first transmission rate. In some embodiments, the one or more transmission resource sets may correspond one-to-one with one or more transmission rates. Here, the one or more transmission rates may be different. That is, the one or more transmission resource sets may correspond to different transmission rates. In some embodiments, the first transmission resource set may correspond to multiple transmission rates. The multiple transmission rates may include the first transmission rate.

It should be noted that a transmission parameter set may correspond to a certain transmission rate or certain transmission rates. Exemplarily, the one or more transmission parameter sets may include a first transmission parameter set. The first transmission parameter set may correspond to a second transmission rate. In some embodiments, the one or more transmission parameter sets may correspond one-to-one with one or more transmission rates. Here, the one or more transmission rates may be different. That is, the one or more transmission parameter sets may correspond to different transmission rates. In some embodiments, the first transmission parameter set may correspond to multiple transmission rates. The multiple transmission rates may include the second transmission rate. Based on this, the second device may select or recommend the target transmission resource set based on the transmission rate corresponding to the first information and the transmission rates corresponding to the one or more transmission resource sets, so that the transmission resource set used in the communication process is more suitable for the transmission rate corresponding to the first information.

It should be noted that the first transmission rate and the second transmission rate may be the same or different, and the present disclosure is not limited thereto.

In some embodiments, the one or more transmission resource sets may include a first transmission resource set. The first transmission resource set may include a first CG configuration and/or a first SPS configuration.

In some embodiments, the one or more transmission parameter sets may include a first transmission parameter set. The first transmission parameter set may include one or more of: one or more of LCH configuration parameters, one or more of PUSCH parameters, one or more of PUCCH parameters, one or more of PDSCH parameters, one or more of PDCP parameters, one or more of RLC parameters, or one or more of MAC configuration parameters.

Optionally, the second device may indicate a transmission rate, and the first device may determine, based on the transmission rate, one or more of: a transmission resource set to be used, a transmission parameter set to be used, transmission parameters to be used, transmission resources to be used, a carrier to be activated/deactivated, an Scell to be activated/deactivated, or whether to deactivate a secondary cell group. Optionally, the first device may indicate a transmission rate, and the second device may determine, based on the transmission rate, a transmission resource set to be used, or a transmission parameter set to be used, or transmission parameters to be used, or transmission resources to be used, or a carrier to be activated/deactivated, or an Scell to be activated/deactivated, or whether to deactivate a secondary cell group.

In some embodiments, the one or more transmission parameter sets may include an initial or default transmission parameter set, and/or the one or more transmission resource sets include an initial or default transmission resource set. Here, the initial transmission parameter set may also be referred to as an initial used transmission parameter set; and the initial transmission resource set may also be referred to as an initial used transmission parameter set.

The initial or default transmission resource set may satisfy one or more of: pre-configuration, a preset value, configuration by a network device, definition by a standard. When the initial or default transmission resource set is configured by the network device, the network device may configure the initial or default transmission resource set via one or more of the following messages: an RRC message, a MAC CE, or a DCI.

The initial or default transmission parameter set may satisfy one or more of: pre-configuration, a preset value, configuration by a network device, definition by a standard. When the initial or default transmission parameter set is configured by the network device, the network device may configure the initial or default transmission parameter set via one or more of the following messages: an RRC message, a MAC CE, or a DCI.

The initial or default transmission resource set may be a transmission resource set that satisfies a certain condition. In some embodiments, the initial or default transmission resource set may be a transmission resource set with a CG/SPS index of a specific value (e.g., minimum, or maximum) among the one or more transmission resource sets. In some embodiments, the initial or default transmission resource set may be a transmission resource set with a transmission resource set index of a specific value (e.g., minimum, or maximum) among the one or more transmission resource sets. In some embodiments, the initial or default transmission resource set may be a specific transmission resource set.

The initial or default transmission parameter set may be a transmission parameter set that satisfies a certain condition. In some embodiments, the initial or default transmission parameter set may be a transmission parameter set with a transmission parameter of a specific value (e.g., minimum, or maximum) among the one or more transmission parameter sets. In some embodiments, the initial or default transmission parameter set may be a transmission parameter set with a transmission parameter set index of a specific value (e.g., minimum, or maximum) among the one or more transmission parameter sets. In some embodiments, the initial or default transmission parameter set may be a specific transmission parameter set.

In some embodiments, the initial or default transmission parameter set and/or the initial or default transmission resource set are used for transmission in one or more of the following cases: the second device does not perform the first operation; the first device or the second device receives the one or more transmission parameter sets; the first device or the second device receives the one or more transmission resource sets; the first device does not report the first information; the first device is not triggered or enabled to report the first information; being instructed to use the initial transmission parameter set; being instructed to use the default transmission parameter set; being instructed to use the initial transmission resource set; being instructed to use the default transmission resource set; being indicated that the default transmission parameter set is activated; being indicated that the initial transmission parameter set is activated; being indicated that the initial transmission parameter set is not deactivated; being indicated that the default transmission parameter set is not deactivated; being indicated that the default transmission resource set is activated; being indicated that the initial transmission resource set is activated; being indicated that the initial transmission resource set is not deactivated; indicated that the default transmission resource set is not deactivated; within a validity period of the initial transmission parameter set; within a validity period of the default transmission parameter set; within an validity period of the initial transmission resource set; within a validity period of the default transmission resource set; the first device does not receive an instruction to update a transmission parameter set; the first device does not receive an instruction to update a transmission resource set; the second device does not receive an instruction to update a transmission parameter set; or the second device does not receive an instruction to update a transmission resource set. When one or more of the above cases are satisfied, the first device and/or the second device may perform transmission using the initial or default transmission parameter set and/or the initial or default transmission resource set. In some embodiments, the first device and/or the second device may perform transmission using the initial or default transmission parameter set and/or the initial or default transmission resource set, until one or more of the above conditions are no longer satisfied.

It should be noted that the validity period may refer to a time window in which the initial or default transmission parameter set and/or the initial or default transmission resource set are used, or a first duration (for example, a duration of a first timer) in which the initial or default transmission parameter set and/or the initial or default transmission resource set are used. The validity period may be determined by one or more of: a start time, a duration, an end time, or the like. Here, the start time may be a time when the fourth information is received. Alternatively, the start time may be a time at which the initial or default transmission parameter set and/or the initial or default transmission resource set start to be activated or used.

It should be noted that the validity period may be configured by the network device. In some embodiments, one or more of the following parameters of the validity period may be configured by the network device: a start time, a duration, or an end time. Exemplarily, the validity period may be configured via an RRC message.

It should be noted that the initial or default transmission resource set and/or the initial or default transmission parameter set may be indicated by the fourth information. That is, the initial or default transmission resource set and/or the initial or default transmission parameter set may be indicated by the second device to the first device.

In some embodiments, the second device may transmit fifth information to the first device. The fifth information may be used to indicate an updated transmission parameter set or the target transmission parameter set; and/or, the fifth information may be used to indicate an updated transmission resource set or the target transmission resource set. The target transmission resource set may be a transmission resource set selected or recommended by the second device. The target transmission resource set may be the same as or different from a currently used transmission resource set. The target transmission parameter set may be a transmission parameter set selected or recommended by the second device. The target transmission parameter set may be the same as or different from a currently used transmission parameter set. The updated transmission parameter set may be a changed target transmission parameter set. That is to say, if the transmission parameter set selected or recommended by the second device is different from the currently used transmission parameter set, the target transmission parameter set may be the updated transmission parameter set. The updated transmission resource set may be a changed target transmission resource set. That is to say, if the transmission resource set selected or recommended by the second device is different from the currently used transmission resource set, the target transmission resource set may be the updated transmission resource set.

Exemplarily, after the second device selects or recommends the target transmission parameter set and/or the target transmission resource set, the second device may indicate, to the first device, the target transmission resource set and/or the target transmission parameter set selected or recommended by the second device. Alternatively, after the second device selects or recommends the target transmission parameter set and/or the target transmission resource set, if the target transmission parameter set and/or the target transmission resource set are different from the currently used transmission parameter set and/or the currently used transmission resource set, the second device may indicate the updated transmission resource set and/or the updated transmission parameter set.

Optionally, the fifth information may be indicated via one or more of the following messages: RRC, MAC CE, or DCI. In some embodiments, the fifth information may indicate an index/identifier of a resource or parameter, or may indicate a rate identifier or a rate value.

It should be noted that the present disclosure does not limit the transmission order of the first information to the fifth information. Taking the second information and the fifth information as an example, the second information may be transmitted before the fifth information is transmitted. In some embodiments, the second information may be transmitted after the fifth information is transmitted.

In some embodiments, the first device and/or the second device may perform transmission based on the fifth information. That is, the first device and/or the second device may perform transmission using the target transmission resource set and/or the target transmission parameter set indicated by the fifth information. That is, the target transmission resource set and/or the target transmission parameter set are set(s) determined to be used.

In some embodiments, the first device and/or the second device may determine transmission parameters and/or transmission resources based on the fifth information. That is, the first device and/or the second device may determine appropriate transmission parameters and/or transmission resources based on the target transmission resource set and/or the target transmission parameter set indicated by the fifth information, and then perform transmission using the transmission parameters and/or the transmission resources. That is, the target transmission resource set and/or the target transmission parameter set are set(s) recommended to be used.

In some embodiments, the first device and/or the second device may perform transmission based on the fifth information. That is, the first device and/or the second device may determine, using the rate identifier or the rate value indicated by the fifth information, the target transmission resource set and/or the target transmission parameter set for transmission. That is, the target transmission resource set and/or the target transmission parameter set are set(s) determined to be used.

In some embodiments, in a case where the first device determines or recommends transmission parameters and/or transmission resources based on the fifth information (i.e., the target transmission resource set and/or the target transmission parameter set is set(s) recommended to be used), the first device may transmit sixth information. The sixth information may be used to indicate the transmission parameters and/or the transmission resources recommended or determined by the first device. That is to say, the sixth information may be related to the fifth information. In some embodiments, the sixth information may be the same as the fifth information or the sixth information may be similar to the fifth information.

In some embodiments, in a case where the first device determines or recommends rate information (i.e., target rate information) based on the fifth information, the first device may transmit sixth information. The sixth information may be used to indicate the target rate information recommended or determined by the first device, and/or transmission parameters and/or transmission resources. That is to say, the sixth information may be related to the fifth information. In some embodiments, the sixth information may be the same as the fifth information or the sixth information may be similar to the fifth information.

In some embodiments, the first device may transmit seventh information to the second device. The seventh information may be used to indicate transmission parameters and/or transmission resources recommended or determined by the first device, and/or the first device performs transmission based on the seventh information. It can be understood that in this embodiment, the first device may directly recommend or determine the transmission parameters and/or the transmission resources, without needing to select from the one or more sets.

In some embodiments, the first device may transmit seventh information to the second device. The seventh information may be used to indicate rate information recommended or determined by the first device, and/or recommended transmission parameters and/or transmission resources, and/or the first device performs transmission based on the seventh information. It can be understood that in this embodiment, the first device may directly recommend or determine the rate, and/or the transmission parameters and/or the transmission resources, without needing to select from the one or more sets. Optionally, the second device determines, based on the recommended information, transmission resources or transmission parameters or a transmission rate; indicates, to the first device, transmission resources or transmission parameters or a transmission rate finally to be used; and/or performs transmission or scheduling.

Optionally, the first device and/or the second device may perform transmission using the transmission resources and/or the transmission parameters indicated by the seventh information. Alternatively, the first device and/or the second device may not directly use the transmission resources and/or the transmission parameters indicated by the seventh information for transmission. Whether to use the transmission resources and/or the transmission parameters indicated by the seventh information for transmission may depend on network configuration or network updates.

In some embodiments, the second device may perform transmission based on the seventh information, or the second device may determine or recommend transmission parameters and/or transmission resources based on the seventh information. Exemplarily, in a case where the second device determines or recommends the transmission resources and/or the transmission parameters based on the seventh information, the second device may transmit eighth information to the first device. The eighth information may be used to indicate the transmission parameters and/or the transmission resources recommended or determined by the second device.

In order to facilitate understanding of the present disclosure, the present disclosure will be described in detail below with reference to Embodiments 1 to 4.

### Embodiment 1

Embodiment 1 is directed to uplink transmission. In Embodiment 1, the first device includes a terminal device or a core network device. The second device includes a base station. In Embodiment 1, the first information is rate adjustment information. Based on the reported rate adjustment information, the base station may adjust resource allocation or parameter configuration.

FIG. 3 is a flowchart of a wireless communication method according to Embodiment 1. The method illustrated in FIG. 3 may include an operation S310 and an operation S320.

In the operation S310, the terminal device or the core network device indicates the rate adjustment information to the base station.

In some embodiments, the terminal device or the core network, when obtaining the rate adjustment information, notifies the rate adjustment information to the base station. Alternatively, the terminal device or the core network notifies the rate adjustment information to the base station when the base station requests to obtain the rate adjustment information.

In some embodiments, the terminal device may report, to the base station, whether the terminal device supports reporting of the rate adjustment information.

In some embodiments, the manner in which the terminal device obtains the rate adjustment information is that: a higher layer of the terminal device delivers the rate adjustment information to a lower layer of the terminal device (through implementation of the terminal device, or via packet header information, etc.), or the core network notifies the rate adjustment information to the terminal device (e.g., via NAS signaling)

In some embodiments, if the terminal device reports the rate adjustment information, the terminal device reports the rate adjustment information through a UL RRC message. In some embodiments, the UL RRC message may be UEassistanceinformation. Alternatively, if the terminal device reports the rate adjustment information, the terminal device reports the rate adjustment information through a UL NAS message. In some embodiments, the UL NAS message may be ULinformationTransfer or other NAS message (the core network forwards the rate adjustment information to the base station after obtaining the rate adjustment information).

In some embodiments, the base station may, in otherconfig, instruct the terminal device to report the rate adjustment information. A first indication may be carried in the otherconfig. In some embodiments, the first indication may be used to instruct or enable the terminal device to report the rate adjustment information. In some embodiments, the first indication may indicate, in the otherconfig, that the corresponding rate adjustment information for a specific QoS flow index or QoS flow list is to be reported. In some embodiments, the first indication may indicate, in the otherconfig, that the corresponding rate adjustment information for a specific DRB index or DEB list is to be reported.

In some embodiments, when a first condition is satisfied, the terminal device reports the rate adjustment information. Here, the first condition may include at least one of: a reporting prohibition timer corresponding to the rate adjustment information for the terminal device or for QoS flow(s)/DRB(s) is not running or expires; the terminal device, when configured to report, has not yet reported the rate adjustment information for the terminal device or for the QoS flow(s)/DRB(s); or a change occurs in the information reported last time or a magnitude of the change in the information is greater than a first threshold (e.g., a change occurs in the reporting for the terminal device, or a change occurs in the reporting for a specific or certain QoS flow/DRB).

In some embodiments, the rate adjustment information is indicated at a granularity of a terminal device, QoS flow(s), or DRB(s).

In some embodiments, the rate adjustment information may be added in QOS-FlowUL-TrafficInfo IE of PDU-SessionUL-TrafficInfo in UL-TrafficInfo. In some embodiments, the rate adjustment information may be added in UL-TrafficInfo. In some embodiments, the rate adjustment information may be added in PDU-SessionUL-TrafficInfo in UL-TrafficInfo. In some embodiments, rate adjustment information corresponding to the QoS flow identifier (qfi) in the above IE may be indicated in the above IE.

In some embodiments, in UEassistanceinformation, a new UAI may be introduced to report the rate adjustment information. For example, a new IE may be introduced. The new IE may be used to indicate the rate adjustment information for a terminal device or for QoS flow(s) or for DRB(s).

If the CN indicates the rate adjustment information, the CN indicates the rate adjustment information through a CP message. In some embodiments, the CP message may be TSCAI. In some embodiments, since the TSCAI is indicated on QoS flow basis, the rate adjustment information corresponding to the QoS flow corresponding to the TSCAI may be added into the TSCAI information. In some embodiments, the rate adjustment information may also be indicated through other CP information, such as by indicating one or more QoS flows, and indicating the rate adjustment information for this one QoS flow or for these QoS flows as a whole. In some embodiments, the rate adjustment information for the terminal device may be indicated through CP information.

It should be noted that the rate adjustment information may be the information for a terminal device, a QoS flow, or a QoS flow list. The rate adjustment information may be initial information or changed information. The rate adjustment information may be bit rate information, frame rate information, or packet size/packet rate information.

In the operation S320, the base station performs related configuration, scheduling or resource allocation based on the rate adjustment information.

In some embodiments, based on the rate adjustment information, the base station schedules dynamic scheduling resources, and in some embodiments, adjusts DG configuration. In some embodiments, for the updated DG configuration, the base station configures corresponding LCH configuration parameters and/or LCP mapping restrictions. The LCH configuration parameters and/or LCP mapping restrictions include at least part of LCH parameters and/or LCP mapping restriction factors in the relevant protocols.

In some embodiments, based on the rate adjustment information, the base station may delete an existing CG or SPS configuration, or modify an existing CG or SPS configuration parameter, or add a new CG or SPS configuration. In some embodiments, for the updated CG/SPS configuration, the base station configures corresponding LCH configuration parameters and/or LCP mapping restrictions. The LCH configuration parameters and/or LCP mapping limitations include at least part of LCH parameters and/or LCP mapping restriction factors in the relevant protocols.

In some embodiments, based on the rate adjustment information, the base station adjusts LCP mapping restrictions of an existing CG/SPS/DG.

In some embodiments, based on the rate adjustment information, the base station adjusts LCH configuration parameters of an existing LCH. In some embodiments, the LCH configuration parameters and/or LCP mapping restrictions include at least part of LCH parameters and/or LCP mapping restriction factors in the related protocols.

It should be noted that in the case of SL scenarios, the terminal device may report, to the base station, the rate adjustment information of QoS flow(s) of the SL UE. In some embodiments, the network may, in the sl-AssistanceConfigNR configuration, instruct the terminal device to report the rate adjustment information (for the terminal device or for QoS flow(s)). The terminal device may indicate the rate adjustment information by using sl-UE-AssistanceInformationNR or another newly added terminal device assistance information IE.

In Embodiment 1, by means of indicating rate adjustment information through the terminal device or the CN, the rate adjustment information (i.e., rate change information) can assist the base station in performing resource or parameter configuration adjustment, quickly adapting to rate changes, and thus ensuring the performance of the terminal device.

### Embodiment 2

Embodiment 2 is directed to uplink transmission. In Embodiment 2, the first device includes a terminal device or a core network device. The second device includes a base station. The first information is rate adjustment information. The base station pre-configures multiple sets of transmission resources and/or transmission configuration parameters. Based on the rate adjustment information indicated by the terminal device or the core network device, the base station may indicate, to the terminal, transmission resources and/or transmission configuration parameters updated or to be used.

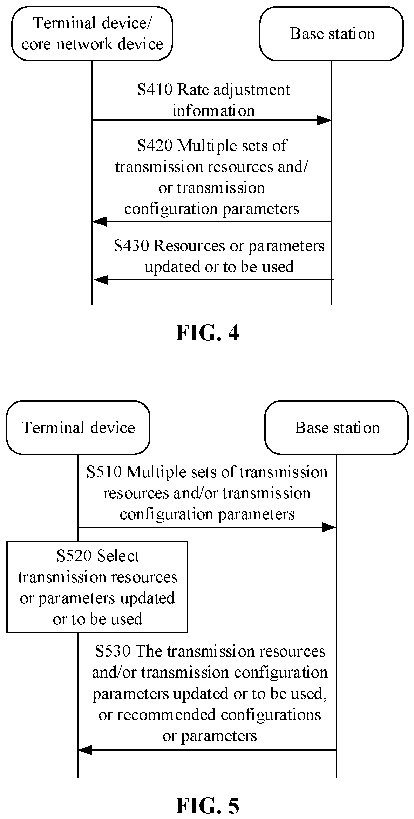

FIG. 4 is a flowchart of a wireless communication method according to Embodiment 2. The method illustrated in FIG. 4 may include operations S410 to S430.

In the operation S410, the terminal device or the core network indicates the rate adjustment information to the base station.

For the specific implementation of the operation S410, the reference may be made to Embodiment 1.

In the operation S420, the base station pre-configures the multiple sets of transmission resources (i.e., multiple transmission resource sets) and/or transmission configuration parameters (i.e., multiple transmission parameter sets).

It should be noted that the order of execution of the operation S410 and the operation S420 is not limited. The operation S420 may be after the operation S410 or may be before the operation S410.

In some embodiments, the multiple sets of transmission resources and/or transmission configuration parameters correspond to different rates, or correspond to different sets. Here, different sets correspond to different rates. Alternatively, one set corresponds to one or more rates.

The multiple sets of transmission resources include at least one of: multiple sets of CG configurations or multiple sets of SPS configurations. In some embodiments, different configurations correspond to different configuration transmissions. In some embodiments, different configurations correspond to different sets or different configuration indices.

The multiple sets of transmission configuration parameters include at least one of: at least one of LCH configuration parameters, at least one of PUSCH parameters, at least one of PUCCH parameters, at least one of PDSCH parameters, at least one of PDCP parameters, at least one of RLC parameters, or at least one of MAC configuration parameters. In some embodiments, different parameters have different values. In some embodiments, different parameters correspond to different sets or different set indices.

The multiple sets of transmission resources and/or transmission configuration parameters include a set of default or initial resources or parameters. The default or initial resources or parameters are configured or indicated by RRC, or indicated by MAC CE, or indicated by DCI. The default or initial resources or parameters are of a CG/SPS index with a specific value (e.g., minimum or maximum), or a specific set, or a set index with a specific value (e.g., minimum or maximum).

In some embodiments, where the multiple sets of transmission resources and/or transmission configuration parameters are configured, the terminal device performs transmission using the default or initial resources or parameters, until the network instructs the terminal device to update resources or parameters to be used.

In some embodiments, if the rate adjustment is periodic or regular, the base station may also indicate, in the operation S410, at least one of: usage time points, usage durations, usage orders, usage patterns, periods of the usage patterns, start times of the usage patterns, or the like, for different sets.

In the operation S430, the base station indicates, through indication information, resources or parameters updated or to be used. Accordingly, based on the indication from the base station, the terminal device modifies, updates, or uses the resources or parameters indicated by the base station for transmission.

In some embodiments, the indication information may be indicated to the terminal device by a DCI, a MAC CE, or a RRC message.

In some embodiments, if the rate adjustment is periodic or regular, the base station may also indicate, in the operation S410, at least one of: usage time points, usage durations, usage orders, usage patterns, periods of the usage patterns, start times of the usage patterns, or the like, for different sets. Correspondingly, when the base station indicates an update, the base station may not need to indicate which specific set to use, but only indicate a resource or parameter configuration update.

In some embodiments, based on the rate adjustment information indicated by the terminal device or the CN, the base station may adjust resources or transmission parameters that the terminal device needs to use. For example, the base station indicates, to the terminal device, a CG/SPS index updated or to be used, a set to be used, a set index to be used, or the like. Accordingly, the terminal device performs transmission using the updated resources and/or parameters based on the indication from the base station.

In some embodiments, based on the rate adjustment information indicated by the terminal device or the CN, the base station schedules DG, and/or, removes/deactivates CG/SPS transmission.

Embodiment 2 may also be applicable to SL scenarios.

In Embodiment 2, by means of indication through the terminal device or the CN, combined with pre-configured resources, the rate change information is obtained and resource usage is quickly adjusted based on the rate adjustment information. This method can reduce air interface resource reconfiguration overhead, and quickly adapt to rate changes, thereby ensuring the performance of terminal device.

### Embodiment 3

Embodiment 3 is directed to uplink transmission. In Embodiment 3, the second device may include a terminal device, and the first device may include a core network device and/or a base station. The base station may pre-configure multiple sets of transmission resources and/or transmission configuration parameters. Based on rate adjustment information, the terminal device may select transmission resources and/or transmission configuration parameters updated or to be used. Further, the terminal device may inform, to the base station, the selected transmission resources and/or transmission configuration parameters updated or to be used.

FIG. 5 is a flowchart of a wireless communication method according to Embodiment 3. The method illustrated in FIG. 5 may include operations S510 to S530.

In the operation S510, the base station pre-configures the multiple sets of transmission resources and/or transmission configuration parameters.

The multiple sets of transmission resources and/or transmission configuration parameters correspond to different rates, or correspond to different sets (different sets correspond to different rates, or one set corresponds to one or more rates).

The multiple sets of transmission resources include at least one of: multiple sets of CG configurations or multiple sets of SPS configurations. In some embodiments, different configurations correspond to different configuration transmissions. In some embodiments, different configurations correspond to different sets or different configuration indices.

The multiple sets of transmission configuration parameters include at least one of: at least one of LCH configuration parameters, at least one of PUSCH parameters, at least one of PUCCH parameters, at least one of PDSCH parameters, at least one of PDCP parameters, at least one of RLC parameters, or at least one of MAC configuration parameters. In some embodiments, different parameters have different values. In some embodiments, different parameters correspond to different sets or different set indices.

The multiple sets of transmission resources and/or transmission configuration parameters include a set of default (or initial) resources or parameters. The default (or initial) resources or parameters are configured or indicated by RRC, or indicated by MAC CE, or indicated by DCI. The default (or initial) resources or parameters may be of a CG/SPS index with a specific value (e.g., minimum, or maximum), or a specific set, or a set index with a specific value (e.g., minimum, or maximum).

In some embodiments, when the multiple sets of transmission resources and/or transmission configuration parameters are configured, the terminal device performs transmission using the default (or initial) resources or parameters, until the network instructs the terminal device to update the resources or parameters to be used.

The terminal device obtains the rate adjustment information. The manner in which the terminal device obtains the rate adjustment information is that: a higher layer of the terminal device delivers the rate adjustment information to a lower layer of the terminal device (via implementation of the terminal device, or via packet header information, or the like), or the CN notifies the rate adjustment information to the terminal device (e.g., via NAS signaling).

The rate adjustment information may be information for a terminal device, for a QoS flow, or for a QoS flow list. The rate adjustment information may be initial information or changed information. The rate adjustment information may be bit rate information, frame rate information, or packet size/packet rate information.

In the operation S520, the terminal device selects transmission resources or parameters updated or to be used.

In the operation S530, the terminal device notifies, to the base station, the selected transmission resources and/or transmission configuration parameters updated or to be used, or recommended configurations or parameters.

In some embodiments, the terminal device indicates, to the base station, the selected transmission resources and/or transmission configuration parameters updated or to be used. In some embodiments, the indication may be implemented by UCI information, MAC CE, or RRC signaling. In some embodiments, the indication is for a terminal device, or for a QoS flow, or for a QoS flow list, or for a specific QoS flow, or for a resource, or for a set.

Option 1: based on the rate adjustment information, the terminal device adjusts resources or transmission parameters that the terminal device needs to use. For example, the adjustment includes: a CG/SPS index updated or to be used by the terminal device, or a set determined to be used, or a set index determined to be used, or the like. Accordingly, the terminal device performs transmission using updated or adjusted resources or parameters.

Option 2: based on the rate adjustment information, the terminal device determines resources or transmission parameters updated or to be used. For example, the resources or transmission parameters updated or to be used include: a CG/SPS index updated or to be used by the terminal device, a set determined to be used, or a set index determined to be used, or the like. Accordingly, the terminal device reports the requirement or recommendation to the network. Based on the reporting from the terminal device, the network determines or performs adjustment of the resources or transmission parameters updated or to be used. In some embodiments, the base station indicates, to the terminal device, resources or parameters updated or to be used (e.g., through DCI, MAC CE, or RRC). In some embodiments, the base station schedules DG, and/or, removes/deactivates CG/SPS transmission.

Embodiment 3 may be applicable to SL scenarios.

In Embodiment 3, by means of the terminal device adjustment or terminal device recommendation, combined with preconfigured resources, the terminal device can obtain the rate change information, and quickly adjust the resource usage based on the rate adjustment information, reducing air interface resource reconfiguration overhead, and quickly adapting to rate changes, thereby ensuring the performance of the terminal device.

### Embodiment 4

Embodiment 4 is directed to downlink transmission. The first device is a core network device, and the second device is a base station. The first information may include rate adjustment information. The base station may obtain the rate adjustment information from the core network device, and may perform resource scheduling (e.g., CG/SPS/DG) and/or transmission parameter adjustment (e.g., at least one of LCH, PDCP, RLC, MAC, PUSCH, PDSCH, PUCCH parameters) based on the base station implementation.

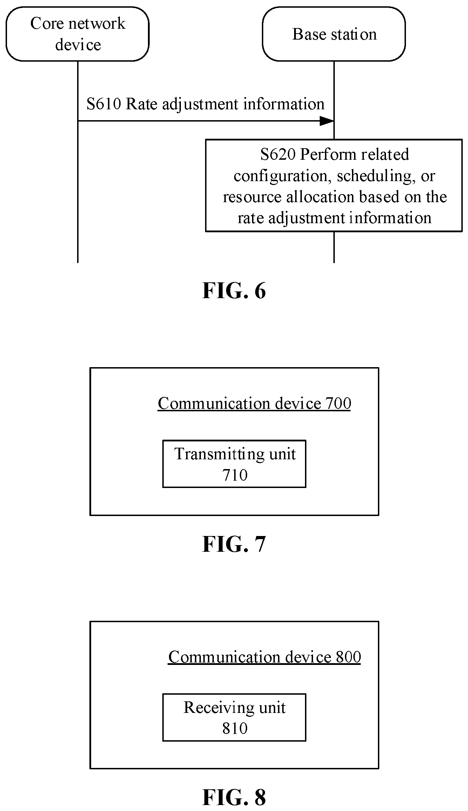

FIG. 6 is a flowchart of a wireless communication method according to Embodiment 4.

The method illustrated in FIG. 6 may include operations S610 and S620.

In the operation S610, the core network indicates the rate adjustment information to the base station.

For the specific implementation of the operation S610, the reference may be made to Embodiment 1.

In the operation S620, the base station performs related configuration, scheduling or resource allocation based on the rate adjustment information.

For the specific implementation of the operation S620, the reference may be made to Embodiment 1.

The method embodiments of the present disclosure have been described in detail above, and the apparatus embodiments of the present disclosure will be described in detail below. It is to be understood that the description of the method embodiments corresponds to the description of the apparatus embodiments. Therefore, for the portions not described in detail, the reference may be made to the foregoing method embodiments.

FIG. 7 is a structural diagram of a communication device 700 according to an embodiment of the present disclosure. The communication device 700 is a first device. The communication device 700 may include a transmitting unit 710.

The transmitting unit 710 is configured to transmit first information to a second device. Here, the first information is related to a transmission rate.

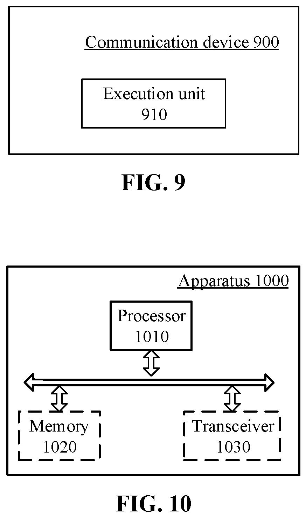

In an alternative embodiment, the transmitting unit 710 may be a transceiver 1030. The communication device 700 may further include a processor 1010 and a memory 1020, as illustrated in FIG. 10.

FIG. 8 is a structural diagram of a communication device 800 according to an embodiment of the present disclosure. The communication device 800 is a second communication device. The communication device 800 may include a receiving unit 810.

The receiving unit 810 is configured to receive first information transmitted by a first device. Here, the first information is related to a transmission rate.

In an alternative embodiment, the receiving unit 810 may be a transceiver 1030. The communication device 800 may further include a processor 1010 and a memory 1020, as illustrated in FIG. 10.

FIG. 9 is a structural diagram of a communication device 900 according to an embodiment of the present disclosure. The communication device 900 includes an execution unit 910.

The execution unit 910 is configured to perform a first operation based on first information. Here, the first information is related to a transmission rate, and the first operation is related to one or more of: transmission parameters, transmission resources, or scheduling.

In an alternative embodiment, the execution unit 910 may be a processor 1010. The communication device 900 may also include a memory 1020 and a transceiver 1030, as illustrated in FIG. 10.

FIG. 10 is a structural diagram of an apparatus for communication according to an embodiment of the present disclosure. The dashed line in FIG. 10 indicates that the unit or module is optional. The apparatus 1000 may be used to implement the methods described in the method embodiments described above. The apparatus 1000 may be a chip, a terminal device, or a network device.

The apparatus 1000 may include one or more processors 1010. The processor 1010 may support the apparatus 1000 to implement the methods described in the foregoing method embodiments. The processor 1010 may be a general purpose processor or a special purpose processor. For example, the processor may be a central processing unit (CPU). Alternatively, the processor may be other general purpose processors, digital signal processors (DSPs), application specific integrated circuits (ASICs), field programmable gate arrays (FPGAs) or other programmable logic devices, discrete gates or transistor logic devices, discrete hardware components, or the like. The general-purpose processor may be a microprocessor or the processor may be any conventional processor or the like.

The apparatus 1000 may also include one or more memories 1020. A program is stored on the memory 1020, and the program can be executed by the processor 1010, causing the processor 1010 to execute the methods described in the foregoing method embodiments. The memory 1020 may be independent of the processor 1010 or may be integrated in the processor 1010.

The apparatus 1000 may also include a transceiver 1030. The processor 1010 may communicate with other devices or chips through the transceiver 1030. For example, the processor 1010 may transmit/receive data to/from other devices or chips through the transceiver 1030.

Embodiments of the present disclosure also provide a computer-readable storage medium for storing a program. The computer-readable storage medium can be applied to the communication device provided by the embodiments of the present disclosure, and the program causes a computer to perform the methods performed by the communication device in various embodiments of the present disclosure.

Embodiments of the present disclosure also provide a computer program product. The computer program product includes a program. The computer program product can be applied to the communication device provided by the embodiments of the present disclosure, and the program causes a computer to perform the methods performed by the communication device in the various embodiments of the present disclosure.

Embodiments of the present disclosure also provide a computer program. The computer program can be applied to the communication device provided by the embodiments of the present disclosure, and the computer program causes a computer to perform the methods performed by the communication device in the various embodiments of the present disclosure.

It is to be understood that the terms "system" and "network" may be used interchangeably in the present disclosure. In addition, the terminology used in the present disclosure is only used to explain specific embodiments of the present disclosure, and is not intended to limit the present disclosure. The terms "first," "second," "third," and "fourth," and the like in the specification and claims of the present disclosure and the accompanying drawings are used to distinguish different objects and are not used to describe a particular order. Furthermore, the terms "comprising/including" and "having" and any variations thereof are intended to cover a non-exclusive inclusion.

In the embodiments of the present disclosure, the "indication" may be a direct indication, an indirect indication, or mean that there is an association relationship. By way of example, A indicates B, which may mean that A directly indicates B, e.g., B may be obtained through A; or may mean that A indirectly indicates B, for example, A indicates C, and B can be obtained through C; or may mean that there is an association relationship between A and B.

In the embodiments of the present disclosure, "B corresponding to A" means that B is associated with A, and B can be determined from A. However, it should also be understood that determining B from A does not mean determining B from A alone, but B may also be determined from A and/or other information.

In the embodiments of the present disclosure, the term "correspondence" may mean that there is a direct correspondence or an indirect correspondence between the two, or may mean that there is an association relationship between the two, or may be a relationship between indicating and being indicated, configuring and being configured, or the like.

In the embodiments of the present disclosure, "pre-definition" or "pre-configuration" can be realized by pre-storing corresponding codes, tables, or other ways that can be used to indicate relevant information in a device (for example, including a terminal device and a network device), and the specific implementation method thereof is not limited in the present disclosure. For example, pre-definition may refer to being defined in a protocol.

In the embodiments of the present disclosure, the "protocol" may refer to a standard protocol in the communication field, and may include, for example, an LTE protocol, an NR protocol, and/or related protocols applied to future communication systems, and the present disclosure is not limited thereto.

The term "and/or" in the embodiments of the present disclosure merely describes an association relationship between the associated objects, indicating that there may be three kinds of relationships, for example, A and/or B, which may mean that A exists alone, A and B exists at the same time, and B exists alone. In addition, the character "/" herein generally indicates that the associated objects before and after the character "/" are in an "or" relationship.

In the embodiments of the present disclosure, "including/comprising" may refer to directly including/comprising or indirectly including/comprising. Alternatively, reference to "including/comprising" in embodiments of the present disclosure may be replaced with "indicating" or "for determining". For example, A includes B, which may be replaced by A indicating B, or A is used to determine B.

In various embodiments of the present disclosure, the size of the sequence numbers of the above-described processes does not mean the execution order, and the execution order of each process should be determined by its function and internal logic, and should not constitute any limitation on the implementation process of the embodiments of the present disclosure.

In the several embodiments provided in the present disclosure, it should be understood that the disclosed systems, apparatuses, and methods may be implemented in other ways. For example, the device embodiments described above are merely illustrative. For example, the division of units is merely a logical function division, and there may be other division methods in actual implementation. For example, multiple units or components may be combined or integrated into another system, or some features may be ignored or not executed. In addition, the couplings or direct couplings or communication connections with each other shown or discussed may be indirect couplings or communication connections through some interfaces, devices or units, and may be in electrical, mechanical or other forms.

The units described as separate components may or may not be physically separated, and the components shown as units may or may not be physical units, i.e., may be located in one place, or may be distributed over multiple network units. Some or all of the units may be selected according to actual needs to achieve the purpose of the solutions of the present embodiments.

In addition, various functional units in each embodiment of the present disclosure may be integrated in one processing unit, or each unit may physically exist alone, or two or more units may be integrated in one unit.

In the above-described embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, processes or functions according to embodiments of the present disclosure are generated in whole or in part. The computer may be a general purpose computer, a special purpose computer, a computer network, or another programmable device. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center via a wired connection (e.g., coaxial cable, fiber optic, digital subscriber line (DSL)) or a wireless connection (e.g., infrared, wireless, microwave). The computer-readable storage medium may be any available medium that can be read by a computer or a data storage device such as a server, a data center, or the like that integrates one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), or the like.

The above descriptions are merely specific implementations of the present disclosure, but the protection scope of the present disclosure is not limited thereto. Any person skilled in the art may readily conceive of variations or substitutions within the technical scope disclosed in the present disclosure, and such variations or substitutions shall all fall within the protection scope of the present disclosure. Therefore, the protection scope of the present disclosure shall be subject to the protection scope of the claims.

## Claims

1. A wireless communication method, comprising:
transmitting, by a first device, first information to a second device;
wherein the first information is related to a transmission rate.

2. The method of claim 1, wherein transmitting, by the first device, the first information to the second device comprises:
in a case where the first device obtains the first information, or in a case where the first information is available or valid, transmitting, by the first device, the first information to the second device.

3. The method of claim 1 or 2, wherein transmitting, by the first device, the first information to the second device comprises:
in response to the second device requesting the first information or enabling transmission of the first information, transmitting, by the first device, the first information to the second device.

4. The method of any one of claims 1 to 3, further comprising:
transmitting, by the first device, second information to the second device;
wherein the second information is used to indicate whether the first device supports reporting of the first information.

5. The method of any one of claims 1 to 4, further comprising:
receiving, by the first device, third information transmitted by the second device;
wherein the third information is used to trigger or enable the first device to transmit the first information.

6. The method of claim 5, wherein the third information is carried in a radio resource control (RRC) message.

7. The method of claim 6, wherein the third information is carried in other configuration information in the RRC message.

8. The method of any one of claims 5 to 7, wherein the third information satisfies one or more of:
the third information is used to trigger or enable the first device to transmit the first information for a terminal device;
the third information is used to trigger or enable the first device to transmit the first information for at least one quality of service (QoS) flow;
the third information is used to trigger or enable the first device to transmit the first information for a specific QoS flow;
the third information is used to trigger or enable the first device to transmit the first information for at least one data radio bearer (DRB);
the third information is used to trigger or enable the first device to transmit the first information for a specific DRB;
the third information is used to trigger or enable the first device to transmit the first information for at least one protocol data unit (PDU) session;
the third information is used to trigger or enable the first device to transmit the first information for a specific PDU session;
the third information is used to trigger or enable the first device to transmit the first information for at least one data flow; or
the third information is used to trigger or enable the first device to transmit the first information for a specific data flow.

9. The method of any one of claims 1 to 8, wherein transmitting, by the first device, the first information to the second device comprises:
in a case where a first condition is satisfied, transmitting, by the first device, the first information to the second device;
wherein the first condition is related to one or more of: a reporting prohibit timer corresponding to the first information, the transmission rate, or a historical reporting situation of the first information.

10. The method of claim 9, wherein the first condition comprises one or more of:
the reporting prohibit timer expires or is not running;
the first information has not yet been reported;
the transmission rate changes;
a change exists between a currently available transmission rate and a previously reported transmission rate;
the change between the currently available transmission rate and the previously reported transmission rate is greater than or equal to a first threshold;
the second device enables transmission of the first information, and the first device has not yet reported the first information; or
a change of the currently available transmission rate relative to a historical transmission rate is greater than or equal to the first threshold.

11. The method of any one of claims 1 to 10, wherein the transmission rate comprises one or more of:
a transmission rate for a terminal device;
transmission rate(s) for one or more quality of service (QoS) flows;
transmission rate(s) for one or more data radio bearers (DRBs);
transmission rate(s) for one or more protocol data unit (PDU) sessions; or
transmission rate(s) for one or more data flows.

12. The method of any one of claims 1 to 11, wherein obtaining of the first information and/or the transmission rate satisfies one or more of:
being delivered from a first protocol layer of a terminal device to a second protocol layer of the terminal device, wherein the first protocol layer is higher than the second protocol layer;
being obtained via implementation of the terminal device;
being obtained via packet header information; or
being obtained via information exchanged with a core network.

13. The method of any one of claims 1 to 12, wherein the first information comprises one or more of:
initial information of the transmission rate;
change information of the transmission rate; or
current information of the transmission rate.

14. The method of any one of claims 1 to 13, wherein the transmission rate is represented by one or more of: bit rate, frame rate, packet size, or packet rate.

15. The method of any one of claims 1 to 14, wherein the first information is used to instruct the second device to perform a first operation based on the first information, wherein the first operation is related to one or more of: transmission parameters, transmission resources, or scheduling.

16. The method of claim 15, wherein the first operation comprises one or more of:
scheduling dynamic scheduling resources;
adjusting a configured grant (CG) configuration;
adjusting a semi-persistent scheduling (SPS) configuration;
configuring a CG;
configuring an SPS;
configuring the transmission parameters;
adjusting the transmission parameters;
selecting a target transmission resource set from among one or more transmission resource sets;
recommending a target transmission resource set from among the one or more transmission resource set;
selecting a target transmission parameter set from among one or more transmission parameter sets; or
recommending a target transmission parameter set from among the one or more transmission parameter sets.

17. The method of claim 16, wherein the first operation comprises one or more of:
scheduling a dynamic grant (DG);
deleting a CG configuration;
deleting an SPS configuration;
modifying a CG configuration;
modifying an SPS configuration;
adding a CG configuration;
adding an SPS configuration;
configuring logical channel (LCH) configuration parameters;
adjusting the LCH configuration parameters;
configuring logical channel prioritization (LCP) mapping restrictions; or
adjusting the LCP mapping restrictions.

18. The method of any one of claims 16 or 17, wherein the transmission parameters comprise one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

19. The method of any one of claims 16 to 18, further comprising:
receiving, by the first device, fourth information transmitted by the second device;
wherein the fourth information is used to indicate one or more of: the one or more transmission resource sets; or the one or more transmission parameter sets.

20. The method of any one of claims 16 to 18, further comprising:
transmitting, by the first device, fourth information to the second device;
wherein the fourth information is used to indicate one or more of: the one or more transmission resource sets; or the one or more transmission parameter sets.

21. The method of any one of claims 16 to 20, wherein
the one or more transmission resource sets comprise a first transmission resource set, the first transmission resource set corresponding to a first transmission rate; and/or,
the one or more transmission parameter sets comprises a first transmission parameter set, the first transmission parameter set corresponding to a second transmission rate.

22. The method of any one of claims 16 to 21, wherein
the one or more transmission resource sets comprise a first transmission resource set, the first transmission resource set comprising a first CG configuration and/or a first SPS configuration.

23. The method of any one of claims 16 to 22, wherein
the one or more transmission parameter sets comprise a first transmission parameter set, the first transmission parameter set comprising one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

24. The method of any one of claims 16 to 23, wherein the one or more transmission parameter sets comprise an initial or default transmission parameter set, and/or the one or more transmission resource sets comprise an initial or default transmission resource set.

25. The method of claim 24, wherein the initial or default transmission parameter set and/or the initial or default transmission resource set are used for transmission in one or more of following cases:
the second device does not perform the first operation;
the first device or the second device receives the one or more transmission parameter sets;
the first device or the second device receives the one or more transmission resource sets;
the first device does not report the first information;
the first device is not triggered or enabled to report the first information;
being instructed to use the initial transmission parameter set;
being instructed to use the default transmission parameter set;
being instructed to use the initial transmission resource set;
being instructed to use the default transmission resource set;
being indicated that the default transmission parameter set is activated;
being indicated that the initial transmission parameter set is activated;
being indicated that the initial transmission parameter set is not deactivated;
being indicated that the default transmission parameter set is not deactivated;
being indicated that the default transmission resource set is activated;
being indicated that the initial transmission resource set is activated;
being indicated that the initial transmission resource set is not deactivated;
being indicated that the default transmission resource set is not deactivated;
within a validity period of the initial transmission parameter set;
within a validity period of the default transmission parameter set;
within an validity period of the initial transmission resource set;
within a validity period of the default transmission resource set;
the first device does not receive an instruction to update a transmission parameter set;
the first device does not receive an instruction to update a transmission resource set;
the second device does not receive an instruction to update a transmission parameter set;
or
the second device does not receive an instruction to update a transmission resource set.

26. The method of any one of claims 16 to 25, further comprising:
receiving, by the first device, fifth information transmitted by the second device;
wherein the fifth information is used to indicate an updated transmission parameter set or the target transmission parameter set; and/or, the fifth information is used to indicate an updated transmission resource set or the target transmission resource set.

27. The method of claim 26, further comprising:
performing, by the first device, transmission based on the fifth information, or
determining, by the first device, transmission parameters and/or transmission resources based on the fifth information.

28. The method of claim 27, further comprising: in a case of determining, by the first device, the transmission parameters and/or the transmission resources based on the fifth information,
transmitting, by the first device, sixth information to the second device;
wherein the sixth information is used to indicate the transmission parameters and/or the transmission resources recommended or determined by the first device.

29. The method of any one of claims 16 to 25, further comprising:
transmitting, by the first device, seventh information to the second device;
wherein the seventh information is used to indicate transmission parameters and/or transmission resources recommended or determined by the first device, and/or, the first device performs transmission based on the seventh information.

30. The method of claim 29, further comprising: in a case where the second device recommends or determines transmission parameters and/or transmission resources based on the seventh information,
receiving, by the first device, eighth information transmitted by the second device;
wherein the eighth information is used to indicate the transmission parameters and/or the transmission resources recommended or determined by the second device.

31. The method of any one of claims 1 to 30, wherein
the first device comprises a core network device and/or a terminal device, and the second device comprises a base station; or,
the first device comprises a core network device, and the second device comprises a terminal device; or,
the first device comprises a terminal device, and the second device comprises a core network device.

32. The method of any one of claims 1 to 30, wherein the first information is carried in one or more of: a radio resource control (RRC) message, a non-access stratum (NAS) message, a media access control control element (MAC CE), uplink control information (UCI), a physical uplink control channel (PUCCH), or a control plane message.

33. The method of claim 31, wherein the RRC message comprises a user equipment assistance information (UEassistanceinformation) message.

34. The method of claim 32, wherein the first information is carried in a quality of service flow uplink traffic information (QOS-FlowUL-TrafficInfo) information element.

35. The method of claim 31, wherein the NAS message comprises an uplink information transfer (ULinformationTransfer) message.

36. The method of claim 31, wherein the control plane message comprises a time sensitive communication assistance information (TSCAI) message or a time sensitive communication assistance container (TSCAC) message.

37. A wireless communication method, comprising:
receiving, by a second device, first information transmitted by a first device;
wherein the first information is related to a transmission rate.

38. The method of claim 37, wherein receiving, by the second device, the first information transmitted by the first device comprises:
in a case where the first device obtains the first information, or in a case where the first information is available or valid, receiving, by the second device, the first information transmitted by the first device.

39. The method of claim 37 or 38, further comprising:
transmitting, by the second device, a first request to the first device, wherein the first request is used to request the first information or to enable transmission of the first information.

40. The method of any one of claims 37 to 39, further comprising:
receiving, by the second device, second information transmitted by the first device;
wherein the second information is used to indicate whether the first device supports reporting of the first information.

41. The method of any one of claims 37 to 40, further comprising:
transmitting, by the second device, third information to the first device;
wherein the third information is used to trigger or enable the first device to transmit the first information.

42. The method of claim 41, wherein the third information is carried in a radio resource control (RRC) message.

43. The method of claim 42, wherein the third information is carried in other configuration information in the RRC message.

44. The method of any one of claims 41 to 43, wherein the third information satisfies one or more of:
the third information is used to trigger or enable the first device to transmit the first information for a terminal device;
the third information is used to trigger or enable the first device to transmit the first information for at least one quality of service (QoS) flow;
the third information is used to trigger or enable the first device to transmit the first information for a specific QoS flow;
the third information is used to trigger or enable the first device to transmit the first information for at least one data radio bearer (DRB);
the third information is used to trigger or enable the first device to transmit the first information for a specific DRB;
the third information is used to trigger or enable the first device to transmit the first information for at least one protocol data unit (PDU) session;
the third information is used to trigger or enable the first device to transmit the first information for a specific PDU session;
the third information is used to trigger or enable the first device to transmit the first information for at least one data flow; or
the third information is used to trigger or enable the first device to transmit the first information for a specific data flow.

45. The method of any one of claims 37 to 44, wherein receiving, by the second device, the first information transmitted by the first device comprises:
in a case where a first condition is satisfied, receiving, by the second device, the first information transmitted by the first device;
wherein the first condition is related to one or more of: a reporting prohibit timer corresponding to the first information, the transmission rate, or a historical reporting situation of the first information.

46. The method of claim 45, wherein the first condition comprises one or more of:
the first information has not yet been reported;
the transmission rate changes;
a change exists between a currently available transmission rate and a previously reported transmission rate;
the change between the currently available transmission rate and the previously reported transmission rate is greater than or equal to a first threshold;
the second device enables transmission of the first information, and the first device has not yet reported the first information; or
a change of the currently available transmission rate relative to a historical transmission rate is greater than or equal to the first threshold.

47. The method of any one of claims 37 to 45, wherein the transmission rate comprises one or more of:
a transmission rate for a terminal device;
transmission rate(s) for one or more quality of service (QoS) flows;
transmission rate(s) for one or more data radio bearers (DRBs);
transmission rate(s) for one or more protocol data unit (PDU) sessions; or
transmission rate(s) for one or more data flows.

48. The method of any one of claims 37 to 47, wherein obtaining of the first information and/or the transmission rate satisfies one or more of:
being delivered from a first protocol layer of a terminal device to a second protocol layer of the terminal device, wherein the first protocol layer is higher than the second protocol layer;
being obtained via implementation of the terminal device;
being obtained via packet header information; or
being obtained via information exchanged with a core network.

49. The method of any one of claims 37 to 48, wherein the first information comprises one or more of:
initial information of the transmission rate;
change information of the transmission rate; or
current information of the transmission rate.

50. The method of any one of claims 37 to 50, wherein the transmission rate is represented by one or more of: bit rate, frame rate, packet size, or packet rate.

51. The method of any one of claims 37 to 50, wherein the first information is used to instruct the second device to perform a first operation based on the first information, wherein the first operation is related to one or more of: transmission parameters, transmission resources, or scheduling.

52. The method of claim 51, wherein the first operation comprises one or more of:
scheduling dynamic scheduling resources;
adjusting a configured grant (CG) configuration;
adjusting a semi-persistent scheduling (SPS) configuration;
configuring a CG;
configuring an SPS;
configuring the transmission parameters;
adjusting the transmission parameters;
selecting a target transmission resource set from among one or more transmission resource sets;
recommending a target transmission resource set from among the one or more transmission resource set;
selecting a target transmission parameter set from among one or more transmission parameter sets; or
recommending a target transmission parameter set from among the one or more transmission parameter sets.

53. The method of claim 52, wherein the first operation comprises one or more of:
scheduling a dynamic grant (DG);
deleting a CG configuration;
deleting an SPS configuration;
modifying a CG configuration;
modifying an SPS configuration;
adding a CG configuration;
adding an SPS configuration;
configuring logical channel (LCH) configuration parameters;
adjusting the LCH configuration parameters;
configuring logical channel prioritization (LCP) mapping restrictions; or
adjusting the LCP mapping restrictions.

54. The method of any one of claims 52 or 53, wherein the transmission parameters comprise one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

55. The method of any one of claims 52 to 54, further comprising:
transmitting, by the second device, fourth information to the first device;
wherein the fourth information is used to indicate one or more of: the one or more transmission resource sets; or the one or more transmission parameter sets.

56. The method of any one of claims 52 to 55, further comprising:
receiving, by the second device, fourth information transmitted by the first device;
wherein the fourth information is used to indicate one or more of: the one or more transmission resource sets; or the one or more transmission parameter sets.

57. The method of any one of claims 55 to 56, wherein
the one or more transmission resource sets comprise a first transmission resource set, the first transmission resource set corresponding to a first transmission rate; and/or,
the one or more transmission parameter sets comprises a first transmission parameter set, the first transmission parameter set corresponding to a second transmission rate.

58. The method of any one of claims 55 to 57, wherein
the one or more transmission resource sets comprise a first transmission resource set, the first transmission resource set comprising a first CG configuration and/or a first SPS configuration.

59. The method of any one of claims 52 to 58, wherein
the one or more transmission parameter sets comprise a first transmission parameter set, the first transmission parameter set comprising one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

60. The method of any one of claims 52 to 59, wherein the one or more transmission parameter sets comprise an initial or default transmission parameter set, and/or the one or more transmission resource sets comprise an initial or default transmission resource set.

61. The method of claim 60, wherein the initial or default transmission parameter set and/or the initial or default transmission resource set are used for transmission in one or more of following cases:
the second device does not perform the first operation;
the first device or the second device receives the one or more transmission parameter sets;
the first device or the second device receives the one or more transmission resource sets;
the first device does not report the first information;
the first device is not triggered or enabled to report the first information;
being instructed to use the initial transmission parameter set;
being instructed to use the default transmission parameter set;
being instructed to use the initial transmission resource set;
being instructed to use the default transmission resource set;
being indicated that the default transmission parameter set is activated;
being indicated that the initial transmission parameter set is activated;
being indicated that the initial transmission parameter set is not deactivated;
being indicated that the default transmission parameter set is not deactivated;
being indicated that the default transmission resource set is activated;
being indicated that the initial transmission resource set is activated;
being indicated that the initial transmission resource set is not deactivated;
being indicated that the default transmission resource set is not deactivated;
within a validity period of the initial transmission parameter set;
within a validity period of the default transmission parameter set;
within an validity period of the initial transmission resource set;
within a validity period of the default transmission resource set;
the first device does not receive an instruction to update a transmission parameter set;
the first device does not receive an instruction to update a transmission resource set;
the second device does not receive an instruction to update a transmission parameter set;
or
the second device does not receive an instruction to update a transmission resource set.

62. The method of any one of claims 52 to 61, further comprising:
transmitting, by the second device, fifth information to the first device;
wherein the fifth information is used to indicate an updated transmission parameter set or the target transmission parameter set; and/or, the fifth information is used to indicate an updated transmission resource set or the target transmission resource set.

63. The method of claim 62, further comprising: in a case where the first device determines transmission parameters and/or transmission resources based on the fifth information,
receiving, by the second device, sixth information transmitted by the first device,
wherein the sixth information is used to indicate the transmission parameters and/or the transmission resources recommended or determined by the first device.

64. The method of any one of claims 52 to 63, further comprising:
receiving, by the second device, seventh information transmitted by the first device;
wherein the seventh information is used to indicate transmission parameters and/or transmission resources recommended or determined by the first device, and/or, the first device performs transmission based on the seventh information.

65. The method of claim 64, further comprising:
performing, by the second device, transmission based on the seventh information; or
recommending or determining, by the second device, transmission parameters and/or transmission resources based on the seventh information.

66. The method of claim 65, further comprising: in a case of recommending or determining, by the second device, the transmission parameters and/or the transmission resources based on the seventh information,
transmitting, by the second device, eighth information to the first device;
wherein the eighth information is used to indicate the transmission parameters and/or the transmission resources recommended or determined by the second device.

67. The method of any one of claims 37 to 66, wherein
the first device comprises a core network device and/or a terminal device, and the second device comprises a base station; or,
the first device comprises a core network device, and the second device comprises a terminal device; or,
the first device comprises a terminal device, and the second device comprises a core network device.

68. The method of any one of claims 37 to 67, wherein the first information is carried in one or more of: a radio resource control (RRC) message, a non-access stratum (NAS) message, a media access control control element (MAC CE), uplink control information (UCI), a physical uplink control channel (PUCCH), or a control plane message.

69. The method of claim 68, wherein the RRC message comprises a user equipment assistance information (UEassistanceinformation) message.

70. The method of claim 69, wherein the first information is carried in a quality of service flow uplink traffic information (QOS-FlowUL-TrafficInfo) information element.

71. The method of claim 68, wherein the NAS message comprises an uplink information transfer (ULinformationTransfer) message.

72. The method of claim 68, wherein the control plane message comprises a time sensitive communication assistance information (TSCAI) message or a time sensitive communication assistance container (TSCAC) message.

73. A wireless communication method, comprising:
performing, by a second device, a first operation based on first information;
wherein the first information is related to a transmission rate, and the first operation is related to one or more of: transmission parameters, transmission resources, or scheduling.

74. A communication device, the communication device being a first device and comprising:
a transmitting unit, configured to transmit first information to a second device;
wherein the first information is related to a transmission rate.

75. The device of claim 74, wherein the transmitting unit is configured to:
in a case where the first device obtains the first information, or in a case where the first information is available or valid, transmit the first information to the second device.

76. The device of claim 74 or 75, wherein the transmitting unit is configured to:
in response to the second device requesting the first information or enabling transmission of the first information, transmit the first information to the second device.

77. The device of any one of claims 74 to 76, wherein the device is further configured to:
transmit second information to the second device;
wherein the second information is used to indicate whether the first device supports reporting of the first information.

78. The device of any one of claims 74 to 77, wherein the device is further configured to:
receive third information transmitted by the second device;
wherein the third information is used to trigger or enable the first device to transmit the first information.

79. The device of claim 78, wherein the third information is carried in a radio resource control (RRC) message.

80. The device of claim 79, wherein the third information is carried in other configuration information in the RRC message.

81. The device of any one of claims 78 to 80, wherein the third information satisfies one or more of:
the third information is used to trigger or enable the first device to transmit the first information for a terminal device;
the third information is used to trigger or enable the first device to transmit the first information for at least one quality of service (QoS) flow;
the third information is used to trigger or enable the first device to transmit the first information for a specific QoS flow;
the third information is used to trigger or enable the first device to transmit the first information for at least one data radio bearer (DRB);
the third information is used to trigger or enable the first device to transmit the first information for a specific DRB;
the third information is used to trigger or enable the first device to transmit the first information for at least one protocol data unit (PDU) session;
the third information is used to trigger or enable the first device to transmit the first information for a specific PDU session;
the third information is used to trigger or enable the first device to transmit the first information for at least one data flow; or
the third information is used to trigger or enable the first device to transmit the first information for a specific data flow.

82. The device of any one of claims 74 to 81, wherein the transmitting unit is configured to:
in a case where a first condition is satisfied, transmit the first information to the second device;
wherein the first condition is related to one or more of: a reporting prohibit timer corresponding to the first information, the transmission rate, or a historical reporting situation of the first information.

83. The device of claim 82, wherein the first condition comprises one or more of:
the reporting prohibit timer expires or is not running;
the first information has not yet been reported;
the transmission rate changes;
a change exists between a currently available transmission rate and a previously reported transmission rate;
the change between the currently available transmission rate and the previously reported transmission rate is greater than or equal to a first threshold;
the second device enables transmission of the first information, and the first device has not yet reported the first information; or
a change of the currently available transmission rate relative to a historical transmission rate is greater than or equal to the first threshold.

84. The device of any one of claims 74 to 83, wherein the transmission rate comprises one or more of:
a transmission rate for a terminal device;
transmission rate(s) for one or more quality of service (QoS) flows;
transmission rate(s) for one or more data radio bearers (DRBs);
transmission rate(s) for one or more protocol data unit (PDU) sessions; or
transmission rate(s) for one or more data flows.

85. The device of any one of claims 74 to 84, wherein obtaining of the first information and/or the transmission rate satisfies one or more of:
being delivered from a first protocol layer of a terminal device to a second protocol layer of the terminal device, wherein the first protocol layer is higher than the second protocol layer;
being obtained via implementation of the terminal device;
being obtained via packet header information; or
being obtained via information exchanged with a core network.

86. The device of any one of claims 74 to 85, wherein the first information comprises one or more of:
initial information of the transmission rate;
change information of the transmission rate; or
current information of the transmission rate.

87. The device of any one of claims 74 to 86, wherein the transmission rate is represented by one or more of: bit rate, frame rate, packet size, or packet rate.

88. The device of any one of claims 74 to 87, wherein the first information is used to instruct the second device to perform a first operation based on the first information, wherein the first operation is related to one or more of: transmission parameters, transmission resources, or scheduling.

89. The device of claim 88, wherein the first operation comprises one or more of:
scheduling dynamic scheduling resources;
adjusting a configured grant (CG) configuration;
adjusting a semi-persistent scheduling (SPS) configuration;
configuring a CG;
configuring an SPS;
configuring the transmission parameters;
adjusting the transmission parameters;
selecting a target transmission resource set from among one or more transmission resource sets;
recommending a target transmission resource set from among the one or more transmission resource set;
selecting a target transmission parameter set from among one or more transmission parameter sets; or
recommending a target transmission parameter set from among the one or more transmission parameter sets.

90. The device of claim 89, wherein the first operation comprises one or more of:
scheduling a dynamic grant (DG);
deleting a CG configuration;
deleting an SPS configuration;
modifying a CG configuration;
modifying an SPS configuration;
adding a CG configuration;
adding an SPS configuration;
configuring logical channel (LCH) configuration parameters;
adjusting the LCH configuration parameters;
configuring logical channel prioritization (LCP) mapping restrictions; or
adjusting the LCP mapping restrictions.

91. The device of any one of claims 89 or 90, wherein the transmission parameters comprise one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

92. The device of any one of claims 89 to 91, wherein the device is further configured to:
receive fourth information transmitted by the second device;
wherein the fourth information is used to indicate one or more of: the one or more transmission resource sets; or the one or more transmission parameter sets.

93. The device of any one of claims 89 to 91, wherein the device is further configured to:
transmit fourth information to the second device;
wherein the fourth information is used to indicate one or more of: the one or more transmission resource sets; or the one or more transmission parameter sets.

94. The device of any one of claims 89 to 93, wherein
the one or more transmission resource sets comprise a first transmission resource set, the first transmission resource set corresponding to a first transmission rate; and/or,
the one or more transmission parameter sets comprises a first transmission parameter set, the first transmission parameter set corresponding to a second transmission rate.

95. The device of any one of claims 89 to 94, wherein
the one or more transmission resource sets comprise a first transmission resource set, the first transmission resource set comprising a first CG configuration and/or a first SPS configuration.

96. The device of any one of claims 89 to 95, wherein
the one or more transmission parameter sets comprise a first transmission parameter set, the first transmission parameter set comprising one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

97. The device of any one of claims 89 to 96, wherein the one or more transmission parameter sets comprise an initial or default transmission parameter set, and/or the one or more transmission resource sets comprise an initial or default transmission resource set.

98. The device of claim 97, wherein the initial or default transmission parameter set and/or the initial or default transmission resource set are used for transmission in one or more of following cases:
the second device does not perform the first operation;
the first device or the second device receives the one or more transmission parameter sets;
the first device or the second device receives the one or more transmission resource sets;
the first device does not report the first information;
the first device is not triggered or enabled to report the first information;
being instructed to use the initial transmission parameter set;
being instructed to use the default transmission parameter set;
being instructed to use the initial transmission resource set;
being instructed to use the default transmission resource set;
being indicated that the default transmission parameter set is activated;
being indicated that the initial transmission parameter set is activated;
being indicated that the initial transmission parameter set is not deactivated;
being indicated that the default transmission parameter set is not deactivated;
being indicated that the default transmission resource set is activated;
being indicated that the initial transmission resource set is activated;
being indicated that the initial transmission resource set is not deactivated;
being indicated that the default transmission resource set is not deactivated;
within a validity period of the initial transmission parameter set;
within a validity period of the default transmission parameter set;
within an validity period of the initial transmission resource set;
within a validity period of the default transmission resource set;
the first device does not receive an instruction to update a transmission parameter set;
the first device does not receive an instruction to update a transmission resource set;
the second device does not receive an instruction to update a transmission parameter set;
or
the second device does not receive an instruction to update a transmission resource set.

99. The device of any one of claims 89 to 98, wherein the device is further configured to:
receive fifth information transmitted by the second device;
wherein the fifth information is used to indicate an updated transmission parameter set or the target transmission parameter set; and/or, the fifth information is used to indicate an updated transmission resource set or the target transmission resource set.

100. The device of claim 99, wherein the device is further configured to:
perform transmission based on the fifth information, or
determine transmission parameters and/or transmission resources based on the fifth information.

101. The device of claim 100, wherein the device is further configured to: in a case where the first device determines the transmission parameters and/or the transmission resources based on the fifth information,
transmit sixth information to the second device;
wherein the sixth information is used to indicate the transmission parameters and/or the transmission resources recommended or determined by the first device.

102. The device of any one of claims 89 to 98, wherein the device is further configured to:
transmit seventh information to the second device;
wherein the seventh information is used to indicate transmission parameters and/or transmission resources recommended or determined by the first device, and/or, the first device performs transmission based on the seventh information.

103. The device of claim 102, wherein the device is further configured to: in a case where the second device recommends or determines transmission parameters and/or transmission resources based on the seventh information,
receive eighth information transmitted by the second device;
wherein the eighth information is used to indicate the transmission parameters and/or the transmission resources recommended or determined by the second device.

104. The device of any one of claims 74 to 103, wherein
the first device comprises a core network device and/or a terminal device, and the second device comprises a base station; or,
the first device comprises a core network device, and the second device comprises a terminal device; or,
the first device comprises a terminal device, and the second device comprises a core network device.

105. The device of any one of claims 74 to 104, wherein the first information is carried in one or more of: a radio resource control (RRC) message, a non-access stratum (NAS) message, a media access control control element (MAC CE), uplink control information (UCI), a physical uplink control channel (PUCCH), or a control plane message.

106. The device of claim 105, wherein the RRC message comprises a user equipment assistance information (UEassistanceinformation) message.

107. The device of claim 106, wherein the first information is carried in a quality of service flow uplink traffic information (QOS-FlowUL-TrafficInfo) information element.

108. The device of claim 105, wherein the NAS message comprises an uplink information transfer (ULinformationTransfer) message.

109. The device of claim 105, wherein the control plane message comprises a time sensitive communication assistance information (TSCAI) message or a time sensitive communication assistance container (TSCAC) message.

110. A communication device, the communication device being a second device and comprising:
a receiving unit, configured to receive first information transmitted by a first device;
wherein the first information is related to a transmission rate.

111. The device of claim 110, wherein the receiving unit is configured to:
in a case where the first device obtains the first information, or in a case where the first information is available or valid, receive the first information transmitted by the first device.

112. The device of claim 110 or 111, wherein the device is further configured to:
transmit a first request to the first device, wherein the first request is used to request the first information or to enable transmission of the first information.

113. The device of any one of claims 110 to 112, wherein the device is further configured to:
receive second information transmitted by the first device;
wherein the second information is used to indicate whether the first device supports reporting of the first information.

114. The device of any one of claims 110 to 113, wherein the device is further configured to:
transmit third information to the first device;
wherein the third information is used to trigger or enable the first device to transmit the first information.

115. The device of claim 114, wherein the third information is carried in a radio resource control (RRC) message.

116. The device of claim 115, wherein the third information is carried in other configuration information in the RRC message.

117. The device of any one of claims 114 to 116, wherein the third information satisfies one or more of:
the third information is used to trigger or enable the first device to transmit the first information for a terminal device;
the third information is used to trigger or enable the first device to transmit the first information for at least one quality of service (QoS) flow;
the third information is used to trigger or enable the first device to transmit the first information for a specific QoS flow;
the third information is used to trigger or enable the first device to transmit the first information for at least one data radio bearer (DRB);
the third information is used to trigger or enable the first device to transmit the first information for a specific DRB;
the third information is used to trigger or enable the first device to transmit the first information for at least one protocol data unit (PDU) session;
the third information is used to trigger or enable the first device to transmit the first information for a specific PDU session;
the third information is used to trigger or enable the first device to transmit the first information for at least one data flow; or
the third information is used to trigger or enable the first device to transmit the first information for a specific data flow.

118. The device of any one of claims 110 to 117, wherein the receiving unit is configured to:
in a case where a first condition is satisfied, receive the first information transmitted by the first device;
wherein the first condition is related to one or more of: a reporting prohibit timer corresponding to the first information, the transmission rate, or a historical reporting situation of the first information.

119. The device of claim 118, wherein the first condition comprises one or more of:
the first information has not yet been reported;
the transmission rate changes;
a change exists between a currently available transmission rate and a previously reported transmission rate;
the change between the currently available transmission rate and the previously reported transmission rate is greater than or equal to a first threshold;
the second device enables transmission of the first information, and the first device has not yet reported the first information; or
a change of the currently available transmission rate relative to a historical transmission rate is greater than or equal to the first threshold.

120. The device of any one of claims 110 to 119, wherein the transmission rate comprises one or more of:
a transmission rate for a terminal device;
transmission rate(s) for one or more quality of service (QoS) flows;
transmission rate(s) for one or more data radio bearers (DRBs);
transmission rate(s) for one or more protocol data unit (PDU) sessions; or
transmission rate(s) for one or more data flows.

121. The device of any one of claims 110 to 120, wherein obtaining of the first information and/or the transmission rate satisfies one or more of:
being delivered from a first protocol layer of a terminal device to a second protocol layer of the terminal device, wherein the first protocol layer is higher than the second protocol layer;
being obtained via implementation of the terminal device;
being obtained via packet header information; or
being obtained via information exchanged with a core network.

122. The device of any one of claims 110 to 121, wherein the first information comprises one or more of:
initial information of the transmission rate;
change information of the transmission rate; or
current information of the transmission rate.

123. The device of any one of claims 110 to 122, wherein the transmission rate is represented by one or more of: bit rate, frame rate, packet size, or packet rate.

124. The device of any one of claims 110 to 123, wherein the first information is used to instruct the second device to perform a first operation based on the first information, wherein the first operation is related to one or more of: transmission parameters, transmission resources, or scheduling.

125. The device of claim 124, wherein the first operation comprises one or more of:
scheduling dynamic scheduling resources;
adjusting a configured grant (CG) configuration;
adjusting a semi-persistent scheduling (SPS) configuration;
configuring a CG;
configuring an SPS;
configuring the transmission parameters;
adjusting the transmission parameters;
selecting a target transmission resource set from among one or more transmission resource sets;
recommending a target transmission resource set from among the one or more transmission resource set;
selecting a target transmission parameter set from among one or more transmission parameter sets; or
recommending a target transmission parameter set from among the one or more transmission parameter sets.

126. The device of claim 125, wherein the first operation comprises one or more of:
scheduling a dynamic grant (DG);
deleting a CG configuration;
deleting an SPS configuration;
modifying a CG configuration;
modifying an SPS configuration;
adding a CG configuration;
adding an SPS configuration;
configuring logical channel (LCH) configuration parameters;
adjusting the LCH configuration parameters;
configuring logical channel prioritization (LCP) mapping restrictions; or
adjusting the LCP mapping restrictions.

127. The device of any one of claims 125 or 126, wherein the transmission parameters comprise one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

128. The device of any one of claims 125 to 127, wherein the device is further configured to:
transmit fourth information to the first device;
wherein the fourth information is used to indicate one or more of: the one or more transmission resource sets; or the one or more transmission parameter sets.

129. The device of any one of claims 125 to 128, wherein the device is further configured to:
receive fourth information transmitted by the first device;
wherein the fourth information is used to indicate one or more of: the one or more transmission resource sets; or the one or more transmission parameter sets.

130. The device of any one of claims 125 to 129, wherein
the one or more transmission resource sets comprise a first transmission resource set, the first transmission resource set corresponding to a first transmission rate; and/or,
the one or more transmission parameter sets comprises a first transmission parameter set, the first transmission parameter set corresponding to a second transmission rate.

131. The device of any one of claims 125 to 129, wherein
the one or more transmission resource sets comprise a first transmission resource set, the first transmission resource set comprising a first CG configuration and/or a first SPS configuration.

132. The device of any one of claims 125 to 131, wherein
the one or more transmission parameter sets comprise a first transmission parameter set, the first transmission parameter set comprising one or more of:
one or more of logical channel (LCH) configuration parameters;
one or more of physical uplink shared channel (PUSCH) parameters;
one or more of physical uplink control channel (PUCCH) parameters;
one or more of physical downlink shared channel (PDSCH) parameters;
one or more of packet data convergence protocol (PDCP) parameters;
one or more of radio link control (RLC) parameters; or
one or more of media access control (MAC) configuration parameters.

133. The device of any one of claims 125 to 132, wherein the one or more transmission parameter sets comprise an initial or default transmission parameter set, and/or the one or more transmission resource sets comprise an initial or default transmission resource set.

134. The device of claim 133, wherein the initial or default transmission parameter set and/or the initial or default transmission resource set are used for transmission in one or more of following cases:
the second device does not perform the first operation;
the first device or the second device receives the one or more transmission parameter sets;
the first device or the second device receives the one or more transmission resource sets;
the first device does not report the first information;
the first device is not triggered or enabled to report the first information;
being instructed to use the initial transmission parameter set;
being instructed to use the default transmission parameter set;
being instructed to use the initial transmission resource set;
being instructed to use the default transmission resource set;
being indicated that the default transmission parameter set is activated;
being indicated that the initial transmission parameter set is activated;
being indicated that the initial transmission parameter set is not deactivated;
being indicated that the default transmission parameter set is not deactivated;
being indicated that the default transmission resource set is activated;
being indicated that the initial transmission resource set is activated;
being indicated that the initial transmission resource set is not deactivated;
being indicated that the default transmission resource set is not deactivated;
within a validity period of the initial transmission parameter set;
within a validity period of the default transmission parameter set;
within an validity period of the initial transmission resource set;
within a validity period of the default transmission resource set;
the first device does not receive an instruction to update a transmission parameter set;
the first device does not receive an instruction to update a transmission resource set;
the second device does not receive an instruction to update a transmission parameter set;
or
the second device does not receive an instruction to update a transmission resource set.

135. The device of any one of claims 125 to 134, wherein the device is further configured to:
transmit fifth information to the first device;
wherein the fifth information is used to indicate an updated transmission parameter set or the target transmission parameter set; and/or, the fifth information is used to indicate an updated transmission resource set or the target transmission resource set.

136. The device of claim 135, wherein the device is further configured to: in a case where the first device determines transmission parameters and/or transmission resources based on the fifth information,
receive sixth information transmitted by the first device,
wherein the sixth information is used to indicate the transmission parameters and/or the transmission resources recommended or determined by the first device.

137. The device of any one of claims 125 to 136, wherein the device is further configured to:
receive seventh information transmitted by the first device;
wherein the seventh information is used to indicate transmission parameters and/or transmission resources recommended or determined by the first device, and/or, the first device performs transmission based on the seventh information.

138. The device of claim 137, wherein the device is further configured to:
perform transmission based on the seventh information; or
recommend or determine transmission parameters and/or transmission resources based on the seventh information.

139. The device of claim 138, wherein the device is further configured to: in a case where the second device recommends or determines the transmission parameters and/or the transmission resources based on the seventh information,
transmit eighth information to the first device;
wherein the eighth information is used to indicate the transmission parameters and/or the transmission resources recommended or determined by the second device.

140. The device of any one of claims 110 to 139, wherein
the first device comprises a core network device and/or a terminal device, and the second device comprises a base station; or,
the first device comprises a core network device, and the second device comprises a terminal device; or,
the first device comprises a terminal device, and the second device comprises a core network device.

141. The device of any one of claims 110 to 140, wherein the first information is carried in one or more of: a radio resource control (RRC) message, a non-access stratum (NAS) message, a media access control control element (MAC CE), uplink control information (UCI), a physical uplink control channel (PUCCH), or a control plane message.

142. The device of claim 141, wherein the RRC message comprises a user equipment assistance information (UEassistanceinformation) message.

143. The device of claim 142, wherein the first information is carried in a quality of service flow uplink traffic information (QOS-FlowUL-TrafficInfo) information element.

144. The device of claim 141, wherein the NAS message comprises an uplink information transfer (ULinformationTransfer) message.

145. The device of claim 141, wherein the control plane message comprises a time sensitive communication assistance information (TSCAI) message or a time sensitive communication assistance container (TSCAC) message.

146. A communication device, comprising:
an execution unit, configured to perform a first operation based on first information;
wherein the first information is related to a transmission rate, and the first operation is related to one or more of: transmission parameters, transmission resources, or scheduling.

147. A communication device, comprising a memory for storing a program and a processor for invoking the program in the memory to cause the communication device to perform the method of any one of claims 1 to 73.

148. An apparatus comprising a processor for invoking a program from a memory to cause the apparatus to perform the method of any one of claims 1 to 73.

149. A chip comprising a processor for invoking a program from a memory to cause a device on which the chip is mounted to perform the method of any one of claims 1 to 73.

150. A computer-readable storage medium having stored thereon a program that causes a computer to perform the method of any one of claims 1 to 73.

151. A computer program product comprising a program that causes a computer to perform the method of any one of claims 1 to 73.

152. A computer program for causing a computer to perform the method of any one of claims 1 to 73.
